(19)

Europäisches
Patentamt
European
Patent Office
Office européen
des brevets

(11) **EP 4 779 892 A1**

(12) **EUROPEAN PATENT APPLICATION**
published in accordance with Art. 153(4) EPC

(43) Date of publication:
**22.07.2026 Bulletin 2026/30**

(21) Application number: **24870616.0**

(22) Date of filing: **20.09.2024**

(51) International Patent Classification (IPC):
***H04B 7/06*** (2006.01)

(52) Cooperative Patent Classification (CPC):
**H04B 7/06; H04B 7/08**

(86) International application number:
**PCT/CN2024/120087**

(87) International publication number:
**WO 2025/067072 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311294486**

(71) Applicant: HUAWEI TECHNOLOGIES CO., LTD.
**Shenzhen 518129 (CN)**

(72) Inventors:
 • **LING, Cen**
  **Shenzhen, Guangdong 518129 (CN)**
 • **LI, Xinxian**
  **Shenzhen, Guangdong 518129 (CN)**
 • **QIN, Qibo**
  **Shenzhen, Guangdong 518129 (CN)**
 • **PENG, Jinlin**
  **Shenzhen, Guangdong 518129 (CN)**

(74) Representative: **Isarpatent
Patent- und Rechtsanwälte Part G mbB
Friedrichstrasse 31
80801 München (DE)**

(54) **BEAM CALIBRATION METHOD AND APPARATUS**

(57) This application provides a beam calibration method and apparatus, to improve beam calibration accuracy. The method includes: A first communication apparatus obtains a downlink beam pattern of a terminal device and an uplink beam pattern of the terminal device, where the downlink beam pattern is obtained by the terminal device by measuring a downlink reference signal sent by a network device, and the uplink beam pattern is obtained by the network device by measuring an uplink reference signal sent by the terminal device; and the first communication apparatus determines first information based on the downlink beam pattern and the uplink beam pattern.

<u>400</u>

FIG. 4

## Description

This application claims priority to Chinese Patent Application No. 202311294486.X, filed with the China National Intellectual Property Administration on September 28, 2023 and entitled "BEAM CALIBRATION METHOD AND APPARATUS", which is incorporated herein by reference in its entirety.

## TECHNICAL FIELD

This application relates to the communication field, and in particular, to a beam calibration method and apparatus.

## BACKGROUND

In high-frequency communication, beamforming may be performed on a signal by using an antenna array, to provide a user data service by using a precise narrow beam. For example, in the high-frequency communication, a network device and a terminal device send and receive signals through beamforming.

Currently, during beam management, the terminal device or the network device may first determine a downlink beam through downlink beam management. After determining the downlink beam, the terminal device or the network device may determine an uplink beam based on the downlink beam when the terminal device or the network device has an uplink and downlink beam correspondence (beam correspondence, BC) (referred to as "beam correspondence" below for short) capability.

However, due to factors such as a form of the network device, a form of the terminal device, interference, and an environment, the correspondence capability of the terminal device or the network device may also change. When the correspondence capability of the terminal device or the network device changes (changes to no beam correspondence capability), the terminal device or the network device may still be considered by default as having the beam correspondence capability, and still determine an uplink beam based on the downlink beam. In this case, a beam calibration result is inaccurate, causing a beam failure recovery (beam failure recovery, BFR) failure and a radio link failure.

## SUMMARY

This application provides a beam calibration method and apparatus, to improve beam calibration accuracy.

According to a first aspect, a beam calibration method is provided. The method includes: A first communication apparatus obtains a downlink beam pattern of a terminal device and an uplink beam pattern of the terminal device, where the downlink beam pattern is obtained by the terminal device by measuring a downlink reference signal sent by a network device, and the uplink beam pattern is obtained by the network device by measuring an uplink reference signal sent by the terminal device; and the first communication apparatus determines first information based on the downlink beam pattern and the uplink beam pattern, where the first information is for beam calibration, and the first information includes information indicating whether a beam of the terminal device has beam correspondence.

In the beam calibration method provided in this application, the beam first information is determined based on the uplink beam pattern and the downlink beam pattern of the terminal device, the first information is for beam calibration, and the beam of the terminal device or a beam of the network device is calibrated based on the first information. In this way, in a scenario in which all beams of the terminal device or the network device have beam correspondence, the terminal device or the network device may determine an uplink beam based on a downlink beam, so that communication between the terminal device and the network device can be established without beam sweeping. In a scenario in which only a part of beams of the terminal device or the network device have beam correspondence, for the beam having beam correspondence, communication between the terminal device and the network device can still be established without beam sweeping; and for a beam having no beam correspondence, communication between the terminal device and the network device can be established by determining, based on beam calibration information, a beam having beam correspondence. In a scenario in which no beam of the terminal device or the network device has beam correspondence, the terminal device or the network device may determine, based on beam calibration information, a beam having beam correspondence, so that the terminal device and the network device can communicate with each other through the beam having a correspondence capability. The terminal device or the network device may determine a beam based on an actual scenario. The determined beam is more applicable to the current scenario, to help improve beam calibration accuracy.

Optionally, the first communication apparatus may be the terminal device, or may be the network device. This is not limited in this application.

Specifically, the beam pattern may indicate signal strengths of beams in different directions. The signal strength of the beam may be RSRP, RSRQ, SINR, or the like of the beam. This is not limited in this application.

With reference to the first aspect, in some implementations of the first aspect, the first information is a first correspondence, the first correspondence indicates a correspondence between a first identifier and the information indicating whether the beam of the terminal device has beam correspondence, and the first identifier is an identifier of the beam of the terminal device or an identifier of a reference signal resource of the terminal device.

Performing beam calibration by setting the first information to the first correspondence helps the terminal device determine a beam having beam correspondence, thereby improving beam calibration efficiency.

It should be understood that, when the first information is the first correspondence, the first communication apparatus determines the first information, that is, the first communication apparatus determines the first correspondence.

Optionally, the first correspondence may be stored in a tag control information (tag control information, TCI) table in the network device.

The first correspondence may include the following two cases.

Case 1: The first identifier is the identifier of the reference signal resource of the terminal device, and the identifier of the reference signal resource of the terminal device may be an identifier of the uplink reference signal or an identifier of the downlink beam reference signal. The first correspondence indicates a correspondence between the identifier of the reference signal resource of the terminal device and the information indicating whether the beam of the terminal device has beam correspondence, that is, the first correspondence may indicate whether beam correspondence exists between the uplink reference signal and the downlink reference signal that correspond to the reference signal resource with the same identifier.

Optionally, a manner in which the first communication apparatus determines the first correspondence based on the uplink beam pattern and the downlink beam pattern may be as follows: The first communication apparatus first determines, based on the downlink beam pattern and the uplink beam pattern, the beam correspondence between the uplink reference signal and the downlink reference signal of the reference signal resource with the same identifier. Then, the first communication apparatus records that the correspondence between the identifier of the reference signal resource and the beam correspondence between the uplink reference signal and the downlink reference signal of the reference signal resource is the first correspondence.

Optionally, a manner of determining the beam correspondence between the uplink reference signal and the downlink reference signal of the reference signal resource with the same identifier may be: The first communication apparatus may first separately sort the downlink beam pattern and the uplink beam pattern in descending or ascending order of power, to separately obtain a downlink reference signal identifier sequence and an uplink reference signal identifier sequence. Then, the first communication apparatus compares the downlink reference signal identifier sequence with the uplink reference signal identifier sequence, and determines that beam correspondence exists between the uplink reference signal and the downlink reference signal that correspond to the reference signal resource with the same identifier and a same rank, and that no beam correspondence exists between an uplink reference signal and a downlink reference signal that correspond to reference signal resources with other identifiers.

Optionally, the beam correspondence between the uplink reference signal and the downlink reference signal of the reference signal resource may also be recorded based on a QCL relationship between the uplink reference signal and the downlink reference signal of the reference signal resource. The QCL relationship may include having beam correspondence and having no beam correspondence. The QCL relationship may be indicated by a character. For example, having beam correspondence may be indicated by "BC", and having no beam correspondence may be indicated by "no-BC".

Case 2: The first identifier is the identifier of the beam of the terminal device, and the identifier of the beam of the terminal device may be a beam identifier of an uplink beam or a beam identifier of a downlink beam. The first correspondence indicates a correspondence between the identifier of the beam of the terminal device and the information indicating whether the beam of the terminal device has beam correspondence, that is, the first correspondence may indicate whether beam correspondence exists between the uplink beam and the downlink beam that correspond to the same beam identifier.

Optionally, one reference signal resource may correspond to a plurality of beams. A manner in which the first communication apparatus determines the first correspondence based on the uplink beam pattern and the downlink beam pattern may be: The first communication apparatus may first determine, based on beam correspondence between the uplink reference signal and the downlink reference signal that correspond to a reference signal resource, beam correspondence between the uplink beam and the downlink beam of beams corresponding to the reference signal resource. Finally, the first communication apparatus records that a correspondence between the identifier of the beam and the beam correspondence between the uplink beam and the downlink beam corresponding to the beam with the identifier is the first correspondence.

With reference to the first aspect, in some implementations of the first aspect, the first information is a bitmap, and the bitmap indicates whether the beam of the terminal device has beam correspondence; and a quantity of bits included in the bitmap is equal to a quantity of beams of the terminal device, or a quantity of bits included in the bitmap is equal to a quantity of reference signal resources of the terminal device.

Performing beam calibration by setting the first information to the bitmap helps the terminal device determine a beam having beam correspondence, thereby improving beam calibration efficiency.

Optionally, if a bit is 1, it indicates that the beam of the terminal device has beam correspondence, and if the bit is 0, it indicates that the beam of the terminal device has no beam correspondence.

It should be understood that, when the first information is the bitmap, the first communication apparatus determines the first information, that is, the first communication apparatus determines the bitmap.

The bitmap may include the following two cases.

Case 1: The quantity of bits included in the bitmap is equal to the quantity of reference signal resources of the terminal device.

Optionally, a manner in which the first communication apparatus determines the bitmap based on the uplink beam pattern and the downlink beam pattern may be: The first communication apparatus may first separately rank the downlink beam pattern and the uplink beam pattern in descending or ascending order of power, to separately obtain rankings of downlink beam angle IDs and uplink beam angle IDs. Then, the first communication apparatus compares the rankings of the downlink beam angle IDs with the rankings of the uplink beam angle IDs, determines that bits of beam angle IDs that ranks the same and whose beam angle IDs are the same are 1, indicating that beam correspondence exists between the uplink reference signal and the downlink reference signal of the reference signal resource of the beam angle IDs, and determines that bits of reference signals of other beam angle IDs are 0, indicating that no correspondence exists between an uplink reference signal and a downlink reference signal that correspond to the other beam angle IDs.

It should be understood that one reference signal resource may correspond to a plurality of beams. The first communication apparatus may determine beam correspondence of a plurality of reference signal resources based on the bitmap of the reference signal resources, and then determine beam correspondence of a plurality of beams corresponding to each reference signal resource based on beam correspondence of the reference signal resource. In other words, when the reference signal resource has the beam correspondence, the beams corresponding to the reference signal resource also has beam correspondence.

Case 2: The quantity of bits included in the bitmap is equal to the quantity of beams of the terminal device.

Optionally, one reference signal resource may correspond to a plurality of beams. A manner in which the first communication apparatus determines the bitmap based on the uplink beam pattern and the downlink beam pattern may be: The first communication apparatus first determines the bitmap whose quantity of bits is equal to the quantity of reference signal resources, and then determines the bitmap whose quantity of bits is equal to the quantity of beams based on a correspondence between reference signal resources and beams.

With reference to the first aspect, in some implementations of the first aspect, the first information is an array, the array includes at least one element, and the at least one element each indicates a similarity between at least one beam of the terminal device as an uplink beam and the at least one beam as a downlink beam, where the at least one beam of the terminal device has beam correspondence.

Performing beam calibration by setting the first information to the array helps the terminal device determine a beam having beam correspondence, thereby improving beam calibration efficiency.

It should be understood that, when the first information is the array, the first communication apparatus determines the first information, that is, the first communication apparatus determines the array.

The array may include the following two cases.

Case 1: An element in the array indicates a similarity between an uplink reference signal and a downlink reference signal that correspond to at least one reference signal resource having beam correspondence.

Optionally, a manner in which the first communication apparatus determines the array based on the uplink beam pattern and the downlink beam pattern may be as follows: The first communication apparatus first determines, based on the downlink beam pattern and the uplink beam pattern, beam correspondence between the uplink reference signal and the downlink reference signal of reference signal resources with a same identifier. Then, the first communication apparatus may select a reference signal resource whose uplink reference signal and downlink reference signal have beam correspondence. Then, the first communication apparatus uses a ratio of a signal strength of the uplink reference signal corresponding to the reference signal resource having beam correspondence to a signal strength of the downlink reference signal corresponding to the reference signal resource having beam correspondence as an element in the array.

It should be understood that the first communication apparatus may determine a ratio of a signal strength of an uplink reference signal corresponding to a reference signal resource having no beam correspondence to a signal strength of a downlink reference signal corresponding to the reference signal resource having no beam correspondence as 0, and use the ratio as an element in the array.

Case 2: An element in the array indicates a similarity between at least one beam of the terminal device as an uplink beam and the at least one beam of the terminal device as a downlink beam, where the at least one beam of the terminal device has beam correspondence.

Optionally, one reference signal may correspond to a plurality of beams, a manner in which the first communication apparatus determines the array based on the uplink beam pattern and the downlink beam pattern may be as follows: The first communication apparatus first determines, based on the downlink beam pattern and the uplink beam pattern, beam correspondence between an uplink reference signal and a downlink reference signal of a reference signal resource with a same identifier. Then, the first communication apparatus may select a reference signal resource whose uplink reference signal and downlink reference signal have beam correspondence. Then, a ratio of a signal strength of a beam as an uplink beam to a signal strength of the beam as a downlink beam is used as an element in the array, where the beam corresponds to the reference signal resource has beam correspondence.

With reference to the first aspect, in some implementations of the first aspect, the first information is a calibration vector, and the calibration vector minimizes a measurement error of the uplink beam pattern and a measurement error of the downlink beam pattern; and a dimension of the calibration vector is equal to a quantity of beams of the terminal device, or a dimension of the calibration vector is equal to a quantity of reference signal resources of the terminal device. The downlink beam pattern may be calibrated by using the calibration vector by setting the first information to the calibration vector, so that a calibrated beam has beam correspondence, and all beams at a terminal device side or a network device side can have a beam correspondence capability, thereby helping avoid a delay and overhead problem caused by uplink beam management performed by the terminal device or the network device, and helping reduce power consumption of the terminal device or the network device. In addition, calibration of beam correspondence helps avoid a network rollback problem that occurs when the terminal device reduces a device temperature when the temperature of the terminal device is high, thereby improving millimeter wave utilization.

It should be understood that, when the first information is the calibration vector, the first communication apparatus determines the first information, that is, the first communication apparatus determines the calibration vector.

Optionally, the uplink beam pattern is an uplink beam pattern measured by the terminal device, the downlink beam pattern is a downlink beam pattern measured by the terminal device, the measurement error of the uplink beam pattern and the measurement error of the downlink beam pattern are minimized by setting a constraint as that a calibration vector exists between the measured uplink beam pattern and the measured downlink beam pattern, and the calibration vector is calculated.

With reference to the first aspect, in some implementations of the first aspect, the first information includes a beam width indicating an uplink beam of the terminal device; the downlink beam pattern includes a downlink wide beam pattern of the terminal device and a downlink narrow beam pattern of the terminal device. That the first communication apparatus determines the first information based on the downlink beam pattern and the uplink beam pattern includes: determining, based on the downlink wide beam pattern and the uplink beam pattern, whether a wide beam of the terminal device has beam correspondence; determining, based on the downlink narrow beam pattern and the uplink beam pattern, whether a narrow beam of the terminal device has beam correspondence; and when all wide beams of the terminal device have beam correspondence and a beam in a narrow beam of the terminal device has no beam correspondence, obtaining the first information based on a width of the wide beam and a width of the narrow beam.

The first information indicates the beam width of the uplink beam of the terminal device, and the uplink beam determined based on the first information not only has beam correspondence, but also can improve a gain of a signal transmitted through the beam. After a beam width is determined, the terminal device and the network device establish communication based on a beam with the width. This helps avoid delay and overhead problems caused by uplink beam management by the terminal device or the network device, and helps reduce power consumption of the terminal device or the network device. In addition, calibration of beam correspondence helps avoid a network rollback problem that happens to the terminal device for reducing a device temperature when the temperature of the terminal device is high, thereby improving millimeter wave utilization.

It should be understood that the wide beam may be used by the terminal device to receive a reference signal sent by the network device based on a system information block (SSB), and the narrow beam may be used by the terminal device to receive a channel state information (channel state information, CSI) reference signal.

It should be further understood that a manner in which the first communication apparatus determines, based on the downlink wide beam pattern and the uplink beam pattern, whether the wide beam of the terminal device has beam correspondence, and a manner in which the first communication apparatus determines, based on the downlink narrow beam pattern and the uplink beam pattern, whether the narrow beam of the terminal device has beam correspondence are the same as the manner in which the first communication apparatus determines, based on the downlink beam pattern and the uplink beam pattern, whether the beam has beam correspondence. Details are not described herein again.

Optionally, that the first communication apparatus obtains the first information based on the width of the wide beam and the width of the narrow beam includes: First, after obtaining the downlink wide beam pattern of the terminal device, the first communication apparatus performs interpolation on each wide beam in the wide beam pattern, to obtain a plurality of first downlink beam patterns with a first width. After obtaining the downlink narrow beam pattern of the terminal device, the first communication apparatus performs interpolation on each narrow beam in the narrow beam pattern, to obtain a plurality of second downlink beam patterns with the first width. Then, the first communication apparatus performs weighted summation on a first beam pattern with the first width and a plurality of second beam patterns with the first width, to obtain a third downlink beam pattern with the first width. Then, the first communication apparatus obtains a plurality of downlink beam patterns with different widths based on a configured quantity of interpolated parts and the third beam pattern with the first width. The first communication apparatus separately determines, based on the plurality of downlink beam patterns with different widths and the uplink beam pattern, whether a plurality of beams with different widths of the terminal device have beam correspondence. Finally, the first communication apparatus uses a beam width of the narrowest beam in beams having beam correspondence as the beam width that is of the uplink beam of the terminal device and that is indicated by the first information.

It should be understood that a manner in which the first communication apparatus determines, based on the plurality of downlink beam patterns with different widths and the uplink beam pattern, whether the plurality of beams with different widths of the terminal device have beam correspondence is the same as the manner in which the first communication apparatus determines, based on the downlink beam pattern and the uplink beam pattern, whether the beam has beam correspondence. Details are not described herein again.

It should be understood that, that the first communication apparatus determines whether the wide beam and the narrow beam of the terminal device have beam correspondence may further include another case: A beam having no beam correspondence exists in both wide beams of the terminal device and narrow beams of the terminal device, or both the wide beam and the narrow beam of the terminal device have beam correspondence. When a beam having no beam correspondence exists in both the wide beams of the terminal device and the narrow beams of the terminal device, the first communication apparatus may determine that there is no beam with an appropriate width for communication, and the terminal device needs to perform beam sweeping to determine an uplink beam when accessing the network device, or the terminal device determines an uplink beam by using the calibration vector after calculating the calibration vector. When both the wide beam and the narrow beam of the terminal device have beam correspondence, the first communication apparatus determines that the beam width that is of the uplink beam of the terminal device and that is indicated by the first information is a beam width corresponding to the narrow beam.

With reference to the first aspect, in some implementations of the first aspect, the first communication apparatus is the network device, and the method further includes: sending the first information to the terminal device.

It should be understood that, when the first communication apparatus is the network device, after determining the first information, the network device sends the first information to the terminal device, so that the terminal device can determine an uplink beam of the terminal device based on the first information. The uplink beam of the terminal device may also be an uplink transmit beam of the terminal device.

With reference to the first aspect, in some implementations of the first aspect, the first communication apparatus is the terminal device, and the method further includes: determining the uplink beam of the terminal device based on the first information.

It should be understood that, when the first communication apparatus is the terminal device, after determining the first information, the terminal device may directly determine the uplink beam of the terminal device based on the first information.

With reference to the first aspect, in some implementations of the first aspect, the method further includes: receiving a plurality of downlink reference signals from the network device, and measuring the plurality of downlink reference signals to obtain a measurement result, where the measurement result includes information indicating a downlink received signal strength of each beam of the terminal device; and determining the uplink beam of the terminal device based on the first information includes: determining the uplink beam of the terminal device based on the first information and the measurement result.

It should be understood that the measurement result may alternatively be a downlink beam pattern.

Specifically, that the terminal device determines the uplink beam of the terminal device based on the first information and the measurement result may include the following plurality of implementations.

In a possible implementation, the first information is the first correspondence, and the terminal device compares downlink received signal strengths of beams having beam correspondence in the first correspondence, and uses a beam with a highest downlink received signal strength as the uplink beam of the terminal device.

With reference to the first aspect, in some implementations of the first aspect, the first information is a first correspondence or a bitmap, the first correspondence indicates a correspondence between a first identifier and the information indicating whether the beam of the terminal device has beam correspondence, the first identifier is an identifier of the beam of the terminal device or an identifier of a reference signal resource of the terminal device, and the bitmap indicates whether the beam of the terminal device has beam correspondence; and determining the uplink beam of the terminal device includes: determining a beam with a highest downlink received signal strength in a beam having beam correspondence as the uplink beam of the terminal device.

Specifically, that the terminal device determines the uplink beam of the terminal device based on the first information and the measurement result may include the following plurality of implementations.

In a possible implementation, the first information is the first correspondence, and the terminal device compares downlink received signal strengths of beams having beam correspondence in the first correspondence, and uses a beam with a highest downlink received signal strength as the uplink beam of the terminal device.

In another possible implementation, the first information is the bitmap, and the terminal device determines downlink received signal strengths of beams having beam correspondence in the bitmap, and uses a beam with a highest downlink received signal strength as the uplink beam of the terminal device.

In still another possible implementation, the first information is a calibration vector. The terminal device calibrates the measurement result by using the calibration vector, and determines a calibrated beam with a highest downlink received signal strength as the uplink beam of the terminal device.

With reference to the first aspect, in some implementations of the first aspect, the first information is the array, and an element in the array indicates a similarity between an uplink reference signal and a downlink reference signal that correspond to at least one reference signal resource having beam correspondence; and the terminal device determines an uplink signal strength based on the array and the downlink received signal strength, and determines an uplink beam with a highest uplink signal strength as the uplink beam of the terminal device.

With reference to the first aspect, in some implementations of the first aspect, the first information is a calibration vector, and the calibration vector minimizes a measurement error of the uplink beam pattern and a measurement error of the downlink beam pattern; and determining the uplink beam of the terminal device includes: calibrating the beam with the highest downlink received signal strength by using the calibration vector, and determining a calibrated beam as the uplink beam of the terminal device.

With reference to the first aspect, in some implementations of the first aspect, the first information includes a beam width indicating a downlink beam of the terminal device; the downlink beam pattern includes a downlink wide beam pattern of the terminal device and a downlink narrow beam pattern of the terminal device. That the first communication apparatus determines the first information based on the downlink beam pattern and the uplink beam pattern includes: determining, based on the downlink wide beam pattern and the uplink beam pattern, whether a wide beam of the terminal device has beam correspondence; determining, based on the downlink narrow beam pattern and the uplink beam pattern, whether a narrow beam of the terminal device has beam correspondence; and when all wide beams of the terminal device have beam correspondence and a beam in a narrow beam of the terminal device has no beam correspondence, obtaining the first information based on a width of the wide beam and a width of the narrow beam.

With reference to the first aspect, in some implementations of the first aspect, the first communication apparatus is the terminal device, and the method further includes: determining the downlink beam of the terminal device based on the first information.

With reference to the first aspect, in some implementations of the first aspect, the method further includes: sending a plurality of uplink reference signals to the network device, and receiving an uplink beam pattern from the network device; and determining the downlink beam of the terminal device based on the first information includes: determining the downlink beam of the terminal device based on the first information and the uplink beam pattern.

With reference to the first aspect, in some implementations of the first aspect, the first information is a first correspondence or a bitmap, the first correspondence indicates a correspondence between a first identifier and the information indicating whether the beam of the terminal device has beam correspondence, the first identifier is an identifier of the beam of the terminal device or an identifier of a reference signal resource of the terminal device, and the bitmap indicates whether the beam of the terminal device has beam correspondence; and determining the downlink beam of the terminal device includes: determining a beam that is in beams having beam correspondence and that has a highest signal strength in the uplink beam pattern as the downlink beam of the terminal device.

With reference to the first aspect, in some implementations of the first aspect, the first information is a calibration vector, and the calibration vector minimizes a measurement error of the uplink beam pattern and a measurement error of the downlink beam pattern; and determining the downlink beam of the terminal device includes: calibrating the beam with the highest signal strength in the uplink beam pattern by using the calibration vector, and determining a calibrated beam as the downlink beam of the terminal device.

According to a second aspect, another beam calibration method is provided. The method includes: A second communication apparatus obtains a downlink beam pattern of a network device and an uplink beam pattern of the network device, where the uplink beam pattern is obtained by the network device by measuring an uplink reference signal sent by a terminal device, and the downlink beam pattern is obtained by the terminal device by measuring a downlink reference signal sent by the network device; and the second communication apparatus determines first information based on the downlink beam pattern and the uplink beam pattern, where the first information is for beam calibration, and the first information includes information indicating whether a beam of the network device has beam correspondence.

With reference to the second aspect, in some implementations of the second aspect, the first information is a first correspondence, the first correspondence indicates a correspondence between a first identifier and the information indicating whether the beam of the network device has beam correspondence, and the first identifier is an identifier of the beam of the network device or an identifier of a reference signal resource of the network device.

With reference to the second aspect, in some implementations of the second aspect, the first information is a bitmap, and the bitmap indicates whether the beam of the network device has beam correspondence; and a quantity of bits included in the bitmap is equal to a quantity of beams of the network device, or a quantity of bits included in the bitmap is equal to a quantity of reference signal resources of the network device.

With reference to the second aspect, in some implementations of the second aspect, the first information is an

**EP 4 779 892 A1**

array, the array includes at least one element, and the at least one element each indicates a similarity between at least one beam of the network device as an uplink beam and the at least one beam as a downlink beam, where the at least one beam of the network device has beam correspondence.

With reference to the second aspect, in some implementations of the second aspect, the first information is a calibration vector, and the calibration vector minimizes a measurement error of the uplink beam pattern and a measurement error of the downlink beam pattern; and a dimension of the calibration vector is equal to a quantity of beams of the network device, or a dimension of the calibration vector is equal to a quantity of reference signal resources of the network device.

With reference to the second aspect, in some implementations of the second aspect, the first information includes a beam width indicating an uplink beam of the network device; the downlink beam pattern includes a downlink wide beam pattern of the network device and a downlink narrow beam pattern of the network device. That the second communication apparatus determines the first information based on the downlink beam pattern and the uplink beam pattern includes: determining, based on the downlink wide beam pattern and the uplink beam pattern, whether a wide beam of the network device has beam correspondence; determining, based on the downlink narrow beam pattern and the uplink beam pattern, whether a narrow beam of the network device has beam correspondence; and when all wide beams of the network device have beam correspondence and a beam in a narrow beam of the network device has no beam correspondence, obtaining the first information based on a width of the wide beam and a width of the narrow beam.

With reference to the second aspect, in some implementations of the second aspect, the second communication apparatus is the terminal device, and the method further includes: sending the first information to the network device.

With reference to the second aspect, in some implementations of the second aspect, the second communication apparatus is the network device, and the method further includes: determining the uplink beam of the network device based on the first information.

With reference to the second aspect, in some implementations of the second aspect, the method further includes: sending a plurality of downlink reference signals to the terminal device, and receiving a downlink beam pattern from the terminal device; and determining the uplink beam of the network device based on the first information includes: determining the uplink beam of the network device based on the first information and the downlink beam pattern.

With reference to the second aspect, in some implementations of the second aspect, the first information is a first correspondence or a bitmap, the first correspondence indicates a correspondence between the first identifier and the information indicating whether the beam of the network device has beam correspondence, the first identifier is the identifier of the beam of the network device or the identifier of the reference signal resource of the network device, and the bitmap indicates whether the beam of the network device has beam correspondence; and determining the uplink beam of the network device includes: determining a beam with a highest downlink received signal strength in a beam having beam correspondence as the uplink beam of the network device.

With reference to the second aspect, in some implementations of the second aspect, the first information is the array, and an element in the array indicates a similarity between an uplink reference signal and a downlink reference signal that correspond to at least one reference signal resource having beam correspondence; and determining the uplink beam of the network device includes: determining an uplink signal strength based on the array and the downlink received signal strength, and determines an uplink beam with a highest uplink signal strength as the uplink beam of the network device.

With reference to the second aspect, in some implementations of the second aspect, the first information is a calibration vector, and the calibration vector minimizes a measurement error of the uplink beam pattern and a measurement error of the downlink beam pattern; and determining the uplink beam of the network device includes: calibrating the downlink beam pattern by using the calibration vector, and determining a calibrated beam with a highest downlink received signal strength as the uplink beam of the network device.

With reference to the second aspect, in some implementations of the second aspect, the first information includes a beam width indicating a downlink beam of the network device; the downlink beam pattern includes a downlink wide beam pattern of the network device and a downlink narrow beam pattern of the network device. That the second communication apparatus determines the first information based on the downlink beam pattern and the uplink beam pattern includes: determining, based on the downlink wide beam pattern and the uplink beam pattern, whether a wide beam of the network device has beam correspondence; determining, based on the downlink narrow beam pattern and the uplink beam pattern, whether a narrow beam of the network device has beam correspondence; and when all wide beams of the network device have beam correspondence and a beam in a narrow beam of the network device has no beam correspondence, obtaining the first information based on a width of the wide beam and a width of the narrow beam.

With reference to the second aspect, in some implementations of the second aspect, the second communication apparatus is the network device, and the method further includes: determining the downlink beam of the network device based on the first information.

With reference to the second aspect, in some implementations of the second aspect, the method further includes: receiving a plurality of uplink reference signals from the terminal device, and measuring the plurality of uplink reference signals to obtain a measurement result, where the measurement result includes information indicating an uplink received signal strength of each beam of the network device; and determining the downlink beam of the network device based on the first information includes: determining the downlink beam of the network device based on the first information and the measurement result.

With reference to the second aspect, in some implementations of the second aspect, the first information is a first correspondence or a bitmap or an array, the first correspondence indicates a correspondence between the first identifier and the information indicating whether the beam of the network device has beam correspondence, the first identifier is the identifier of the beam of the network device or the identifier of the reference signal resource of the network device, the bitmap indicates whether the beam of the network device has beam correspondence, the array includes at least one element, and the at least one element each indicates a similarity between at least one beam of the network device as an uplink beam and the at least one beam as a downlink beam, where the at least one beam of the network device has beam correspondence. Determining the downlink beam of the network device includes: determining a beam with a highest uplink received signal strength in a beam having beam correspondence as the downlink beam of the network device.

With reference to the second aspect, in some implementations of the second aspect, the first information is a calibration vector, and the calibration vector minimizes a measurement error of the uplink beam pattern and a measurement error of the downlink beam pattern; and determining the downlink beam of the network device includes: calibrating the beam with the highest uplink received signal strength by using the calibration vector, and determining a calibrated beam as the downlink beam of the network device.

According to a third aspect, a beam calibration apparatus is provided, and is configured to perform the method in any one of the possible implementations of the first aspect or the second aspect. Specifically, the apparatus includes modules configured to perform the method in any one of the possible implementations of the first aspect or the second aspect.

In a design, the apparatus may include modules in a one-to-one correspondence with the methods/operations/-steps/actions described in the first aspect or the second aspect. The modules may be hardware circuits, or may be software, or may be implemented by hardware circuits in combination with software.

According to a fourth aspect, a beam calibration apparatus is provided. The method includes: a processor and a memory. The processor is configured to read instructions stored in the memory, to perform the method in any one of the possible implementations of the first aspect or the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

The apparatus in the fourth aspect may be a chip. The processor may be implemented by using hardware, or may be implemented by using software. When the processor is implemented by using the hardware, the processor may be a logic circuit, an integrated circuit, or the like; when the processor is implemented by using the software, the processor may be a general purpose processor, and is implemented by reading software code stored in the memory. The memory may be integrated into the processor, may be located outside the processor, and may exist independently.

According to a fifth aspect, a computer program product is provided. The computer program product includes a computer program (which may also be referred to as code or instructions). When the computer program is run, a computer is enabled to perform the method in any one of the possible implementations of the first aspect or the second aspect.

According to a sixth aspect, a computer-readable storage medium is provided. The computer-readable storage medium includes a computer program (which may also be referred to as code or instructions). When the computer program is run on a computer, the computer is enabled to perform the method in any one of the possible implementations of the first aspect or the second aspect.

**BRIEF DESCRIPTION OF DRAWINGS**

FIG. 1 is a diagram of a structure of a communication system according to an embodiment of this application;
FIG. 2 is a diagram of a beam management process according to an embodiment of this application;
FIG. 3 is a diagram of beam correspondence capabilities of a network device and a terminal device;
FIG. 4 is a schematic flowchart of a beam calibration method according to an embodiment of this application;
FIG. 5 is a diagram of a beam pattern according to an embodiment of this application;
FIG. 6 is a block diagram of an interaction procedure of a beam calibration method according to an embodiment of this application;

FIG. 7A and FIG. 7B are a block diagram of an interaction procedure of another beam calibration method according to an embodiment of this application;

FIG. 8A and FIG. 8B are a block diagram of an interaction procedure of still another beam calibration method according to an embodiment of this application;

FIG. 9 is a block diagram of a beam calibration apparatus according to an embodiment of this application; and

FIG. 10 is a block diagram of another beam calibration apparatus according to an embodiment of this application.

## DESCRIPTION OF EMBODIMENTS

The following describes technical solutions of this application with reference to accompanying drawings.

To clearly describe the technical solutions in embodiments of this application, words such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that in this application, the word such as "example" or "for example" represents giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In addition, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

In embodiments of this application, descriptions such as "when", "in a case", and "if" all mean that a device performs corresponding processing in a specific objective situation, but are not intended to limit time, do not require that the device has a determining action during implementation, and do not mean any other limitation.

Technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system, a new radio (new radio, NR) system or another evolved communication system, and a next-generation mobile communication system of a 5G communication system.

The terminal device in embodiments of this application may also be referred to as user equipment (UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, examples of some terminal devices include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (PDA), a handheld device with a wireless communication function, a compute device or another processing device connected to a wireless modem, a vehicle-mounted device, a wearable device, a terminal device in a 5G network, a terminal device in a future evolved public land mobile network (public land mobile network, PLMN), or the like. This is not limited in this application.

As an example instead of a limitation, in this application, the terminal device may be a terminal device in an internet of things (internet of things, IoT) system. The internet of things is an important part of the future information technology development. Its main technical feature is to connect articles and networks through communication technology, to implement an intelligent network of man-machine interconnection and interconnection of things. For example, the terminal device in embodiments of this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable

**EP 4 779 892 A1**

device is a portable device that can be directly worn on a body or integrated into clothes or accessories of a user. Wearable devices are not only hardware devices, and can implement powerful functions through software support, data interaction, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

As an example instead of a limitation, in embodiments of this application, the terminal device may alternatively be a terminal device in machine type communication (machine type communication, MTC). In addition, the terminal device may alternatively be a vehicle-mounted module, a vehicle-mounted assembly, a vehicle-mounted component, a vehicle-mounted chip, a vehicle-mounted unit, or the like built as one or more parts or units in a vehicle. The vehicle may implement the method provided in this application via the built-in vehicle-mounted module, vehicle-mounted assembly, vehicle-mounted component, vehicle-mounted chip, vehicle-mounted unit, or the like. Therefore, embodiments of this application may also be applied to an internet of vehicles, for example, a vehicle to everything (vehicle to everything, V2X), a long term evolution-vehicle (long term evolution-vehicle, LTE-V), or a vehicle-to-vehicle (vehicle-to-vehicle, V2V) technology.

The network device in this application may be a device that communicates with a terminal device. The network device may also be referred to as an access network device or a radio access network device, and may be a transmission reception point (transmission reception point, TRP), or may be an evolved NodeB (evolved NodeB, eNB or eNodeB) in an LTE system, or may be a home NodeB (for example, a home evolved NodeB, or a home NodeB, HNB), or a base band unit (base band unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the network device may be a metro base station, a micro base station, a pico base station, a femto base station, or the like. This is not limited in this application.

In a network structure, the network device may include a central unit (central unit, CU) node, a distributed unit (distributed unit, DU) node, or a radio access network (radio access network, RAN) device including a CU node and a DU node, or a RAN device including a control plane CU node (CU-CP node), a user plane CU node (CU-UP node), and a DU node.

The network device provides a service for a cell, and a terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are applicable to providing a high-speed data transmission service.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that communication can be performed according to the method provided in embodiments of this application. For example, the method provided in embodiments of this application may be performed by the terminal device, the network device, or a functional module that can execute a program in the terminal device or the network device.

In addition, aspects or features in embodiments of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, contain and/or carry instructions and/or data.

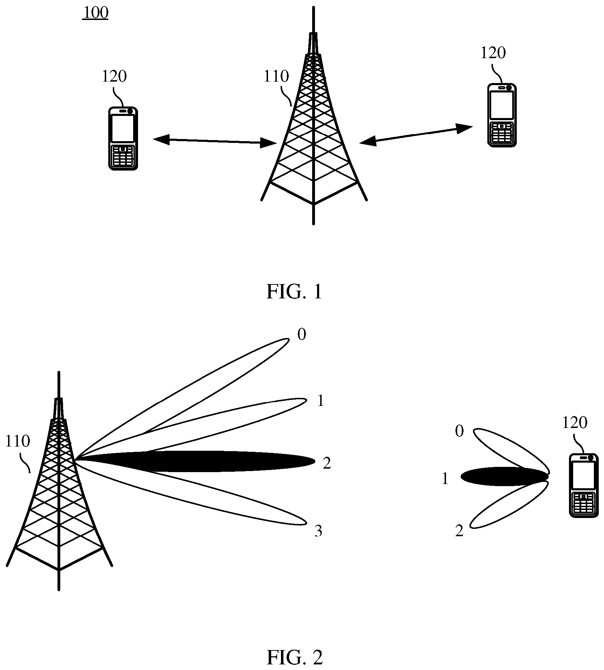

For ease of understanding embodiments of this application, a communication system applicable to embodiments of this application is first described in detail with reference to FIG. 1.

11

FIG. 1 shows a communication system 100 to which an embodiment of this application can be applied. As shown in FIG. 1, the communication system 100 may include at least one network device, for example, a network device 110 shown in FIG. 1, and the communication system 100 may further include at least one terminal device, for example, a terminal device 120 shown in FIG. 1. The network device 110 and the terminal device 120 may communicate with each other through a wireless link. A plurality of antennas may be configured for each communication device, for example, the network device 110 or the terminal device 120. The plurality of antennas may include at least one transmit antenna configured to send a signal and at least one receive antenna configured to receive a signal. In addition, each communication device further includes a transmitter chain and a receiver chain. A person of ordinary skill in the art may understand that each of the transmitter chain and the receiver chain may include a plurality of components (for example, a processor, a modulator, a multiplexer, a demodulator, a demultiplexer, or an antenna) related to signal sending and signal receiving. Therefore, the network device 110 and the terminal device 120 may communicate with each other by using a multi-antenna technology.

FIG. 1 shows one network device and two terminal devices as an example. Optionally, the communication system 100 may include a plurality of network devices, and another quantity of terminal devices may be included in a coverage of each network device. This is not limited in embodiments of this application.

For ease of understanding, terms used in embodiments of this application are first briefly described.

1. Beamforming (beamforming)

"Beamforming", also referred to as "beam forming", is to assign a specific shape and direction of an antenna radiation pattern by adjusting amplitudes and phases of a plurality of antennas, so that energy of a wireless signal is concentrated on a narrower beam, to enhance a coverage and reduce interference.

2. Beam management

A key process of beam management is defined as an L1/L2 process of obtaining and maintaining a set of transmit and receive beams for uplink and downlink data, including four processes: beam sweeping, beam measurement, beam determining, and beam reporting.

(1) Beam sweeping (beam sweeping)

Beam sweeping means that in a spatial area, beams are transmitted and/or received within a specific time interval in a preset manner.

(2) Beam measurement (beam measurement)

Beam measurement means measuring quality of a received beamformed signal (beam). Measurement indicators may include reference signal received power (reference signal received power, RSRP), reference signal received quality (reference signal received quality, RSRQ), signal to interference plus noise ratio (signal to interference plus noise ratio, SINR), and the like.

(3) Beam determining (beam determination)

Beam determining means selecting an optimal beam based on a beam measurement result. "Beam determining" may also be referred to as "beam decision-making".

(4) Beam reporting (beam reporting)

Beam reporting means that a terminal device reports beam decision-making information to a network device based on a beam measurement result, to establish beam directional communication between the network device and the terminal device.

For example, FIG. 2 is a diagram of a downlink beam management process. The network device sends reference signals to the terminal device in different spatial directions through four beams, and the terminal device receives the reference signals through three beams. This is equivalent to that beam sweeping is performed $4 \times 3 = 12$ times in total, and 12 pieces of RSRP are obtained. Therefore, it is determined that a transmit and receive beam pair with the highest RSRP is beams (2, 1), that is, a transmit beam of the base station is a beam 2, and a receive beam of the terminal device is a beam 1.

Similarly, an uplink beam management process is similar to the downlink beam management process. The terminal device determines that a transmit and receive beam pair with the highest RSRP is beams (3, 0), that is, a transmit beam of the terminal device is a beam 3, and a receive beam of the network device is a beam 0.

Specifically, beam management may be classified into the uplink beam management process and the downlink beam management process.

2.1. Downlink beam management process

The downlink beam management process includes the following three processes, and each process includes the foregoing beam management process.

Process 1 (a process of downlink beam coarse alignment between the network device and the terminal device): The terminal device measures different transmit beams of the network device, to support selection of a transmit beam of the network device or selection of a receive beam of the terminal device. Forming on the network device side includes intra-network device transmit beam sweeping or inter-network device transmit beam sweeping. Forming on the terminal device side includes terminal device receive beam sweeping.

Process 2 (a process of fine-tuning a downlink transmit beam of the network device): The terminal device measures different transmit beams of the network device to notify the network device to adjust an intra-network device/inter-network device transmit beam.

Process 3 (a process of fine-tuning a downlink receive beam of the terminal device): The terminal device measures a same transmit beam of the network device to adjust different receive beams of the terminal device.

2.2. Uplink beam management process

The uplink beam management process includes the following three processes, and each process includes the foregoing beam management process.

Process 1 (a process of uplink beam coarse alignment between the network device and the terminal device): The network device measures different transmit beams of the terminal device, to support selection of a transmit beam of the terminal device/a receive beam of the network device.

Process 2 (a process of fine-tuning an uplink receive beam of the network device): The network device measures different receive beams of the network device, to adjust an intra-network device/inter-network device receive beam.

Process 3 (a process of fine-tuning an uplink transmit beam of the terminal device): The network device measures a same receive beam to adjust different transmit beams of the terminal device.

3. Beam correspondence (beam correspondence)

Uplink and downlink beam correspondence (beam correspondence) is classified into network device-side beam correspondence and terminal device-side beam correspondence.

The network device-side beam correspondence means that the network device is capable of determining an uplink receive beam of the network device based on a downlink transmit beam determined by the terminal device by measuring one or more downlink signals of the network device, and the network device is also capable of determining a downlink receive beam of the network device based on an uplink transmit beam determined by the network device by measuring one or more uplink signals of the terminal device.

The terminal device-side beam correspondence means that the terminal device is capable of determining a downlink receive beam of the terminal device based on an uplink transmit beam determined by the network device by measuring one or more uplink signals of the terminal device, and the terminal device is also capable of determining an uplink receive beam of the terminal device based on a downlink transmit beam determined by the terminal device by measuring one or more downlink signals of the network device.

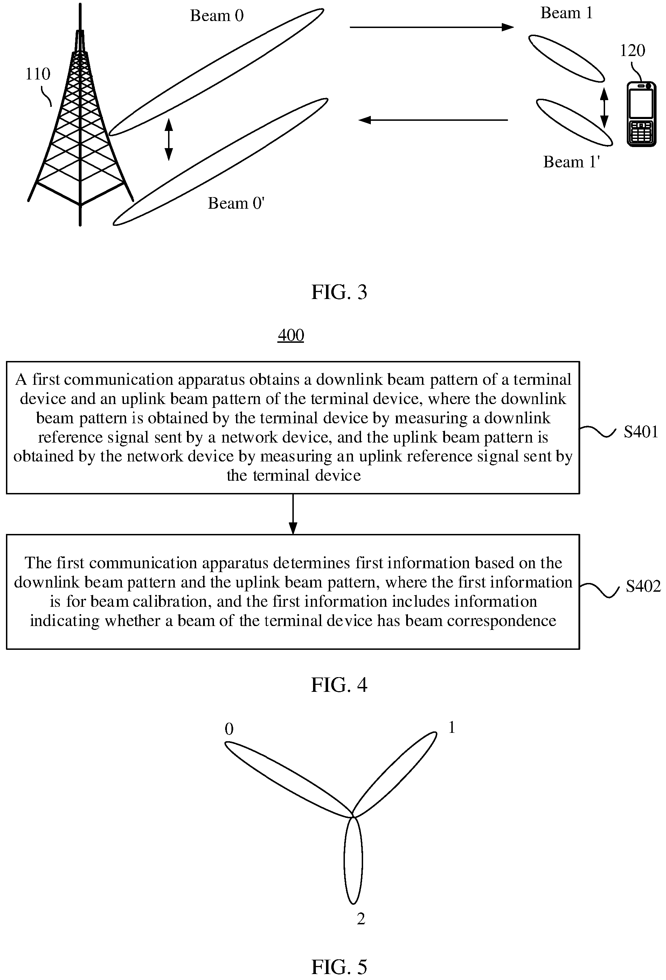

For example, FIG. 3 is a diagram of beam correspondence capabilities of a network device and a terminal device. As shown in FIG. 3, the network device is a TRP, and the terminal device is UE. The TRP may determine a beam 0' based on a beam 0, or may determine a beam 0 based on a beam 0'. The UE may determine a beam 1' based on a beam 1, or may determine a beam 1 based on a beam 1'.

4. Quasi co-location (quasi co-location, QCL)

If on different ports, a large-scale attribute of a channel that a symbol of one port passes through may be deduced from a large-scale attribute of a symbol of another port, the two antenna ports are quasi co-located.

In high-frequency communication, beamforming may be performed on a signal by using an antenna array, to provide a user data service by using a precise narrow beam. For example, in the high-frequency communication, a network device and a terminal device send and receive signals through beamforming.

Currently, during beam management, the terminal device or the network device may first determine a downlink beam through downlink beam management. After determining the downlink beam, the terminal device or the network device may determine an uplink beam based on the downlink beam when the terminal device or the network device has an uplink and downlink beam correspondence (beam correspondence, BC) (referred to as "beam correspondence" below for short) capability.

However, due to factors such as a form of the network device, a form of the terminal device, interference, and an environment, the beam correspondence capability of the terminal device or the network device may also change. When the correspondence capability of the terminal device or the network device changes (changes to no beam correspondence capability), the terminal device or the network device may still be considered by itself by default as having the beam correspondence capability, and still determine an uplink beam based on the downlink beam. In this case, a beam calibration result is inaccurate, and a beam failure recovery (beam failure recovery, BFR) failure and a radio link failure may occur.

In view of this, this application provides a beam calibration method and a beam calibration apparatus, to determine beam calibration information based on an uplink beam pattern and a downlink beam pattern of the terminal device. In this way, in a scenario in which all beams of the terminal device or the network device have beam correspondence, the terminal device or the network device may determine an uplink beam based on a downlink beam, so that communication between the terminal device and the network device can be established without beam sweeping. In a scenario in which only a part of beams of the terminal device or the network device have beam correspondence, for the beam having beam correspondence, communication between the terminal device and the network device can still be established without beam sweeping; and for a beam having no beam correspondence, communication between the terminal device and the network device can be established by determining, based on beam calibration information, a beam having beam correspondence. In a scenario in which no beam of the terminal device or the network device has beam correspondence, the terminal device or the network device may determine, based on beam calibration information, a beam having beam correspondence, so that the terminal device and the network device can communicate with each other through the beam having a correspondence capability. The terminal device or the network device may determine a beam based on an actual scenario. The determined beam is more applicable to the current scenario, to help improve beam calibration accuracy.

The following uses specific embodiments to describe in detail the technical solutions of this application and how to resolve the foregoing technical problem in the technical solutions of this application. The following several specific embodiments may be implemented independently, or may be combined with each other. A same or similar concept or process may not be described again in some embodiments.

FIG. 4 is a schematic flowchart of a beam calibration method 400 according to an embodiment of this application. The method 400 may be performed by a first communication apparatus. The method 400 may include the following steps.

S401: The first communication apparatus obtains a downlink beam pattern of a terminal device and an uplink beam pattern of the terminal device, where the downlink beam pattern is obtained by the terminal device by measuring a downlink reference signal sent by a network device, and the uplink beam pattern is obtained by the network device by measuring an uplink reference signal sent by the terminal device.

Optionally, the first communication apparatus may be the terminal device, or may be the network device. This is not limited in this application.

Specifically, the beam pattern may indicate signal strengths of beams in different directions. The signal strength of the beam may be RSRP, RSRQ, SINR, or the like of the beam. This is not limited in this application.

Optionally, the beam pattern may include a plurality of possible forms.

Form 1: FIG. 5 is a diagram of a beam pattern. As shown in FIG. 5, different lobes indicate beams in different directions, and a length of each lobe indicates a signal strength of the beam. It can be learned that the beam pattern in FIG. 5 includes beams in three different directions. A signal strength of the beam 0 is the strongest, a signal strength of the beam 1 is the second strongest, and a signal strength of the beam 2 is the weakest.

Form 2: The beam pattern may be a one-dimensional matrix. The one-dimensional matrix may include a plurality of elements, the plurality of elements may indicate beams in different directions, the plurality of elements may be arranged in ascending order of beam identifiers, and a size of each element indicates a signal strength of a beam in a direction. For example, the beam pattern may be {40, 35, 25}, indicating that the beam pattern includes three beams in different directions, and beam identifiers are sequentially a beam 0, a beam 1, and a beam 2. A signal strength of the beam 0 is the strongest, a signal strength of the beam 1 is the second strongest, and a signal strength of the beam 2 is the weakest.

S402: The first communication apparatus determines first information based on the downlink beam pattern and the uplink beam pattern, where the first information is for beam calibration, and the first information includes information indicating whether a beam of the terminal device has beam correspondence.

In the beam calibration method provided in this application, the beam first information is determined based on the uplink beam pattern and the downlink beam pattern of the terminal device, the first information is for beam calibration, and the beam of the terminal device or a beam of the network device is calibrated based on the first information. In this way, in a scenario in which all beams of the terminal device or the network device have beam correspondence, the terminal device or

**EP 4 779 892 A1**

the network device may determine an uplink beam based on a downlink beam, so that communication between the terminal device and the network device can be established without beam sweeping. In a scenario in which only a part of beams of the terminal device or the network device have beam correspondence, for the beam having beam correspondence, communication between the terminal device and the network device can still be established without beam sweeping; and for a beam having no beam correspondence, communication between the terminal device and the network device can be established by determining, based on beam calibration information, a beam having beam correspondence. In a scenario in which no beam of the terminal device or the network device has beam correspondence, the terminal device or the network device may determine, based on beam calibration information, a beam having beam correspondence, so that the terminal device and the network device can communicate with each other through the beam having a correspondence capability. The terminal device or the network device may determine a beam based on an actual scenario. The determined beam is more applicable to the current scenario, to help improve beam calibration accuracy.

In an optional embodiment, in Step 402, the first information may include a plurality of possible forms. The first information of different forms is determined in different manners. The following describes a plurality of forms and determining manners of the first information.

In a first possible form, the first information is a first correspondence, the first correspondence indicates a correspondence between a first identifier and the information indicating whether the beam of the terminal device has beam correspondence, and the first identifier is an identifier of the beam of the terminal device or an identifier of a reference signal resource of the terminal device.

Performing beam calibration by setting the first information to the first correspondence helps the terminal device determine a beam having beam correspondence, thereby improving beam calibration efficiency.

It should be understood that, when the first information is the first correspondence, the first communication apparatus determines the first information, that is, the first communication apparatus determines the first correspondence.

Optionally, the first correspondence may be stored in a tag control information (tag control information, TCI) table in the network device.

The first correspondence may include the following two cases.

Case 1: The first identifier is the identifier of the reference signal resource of the terminal device, and the identifier of the reference signal resource of the terminal device may be an identifier of the uplink reference signal or an identifier of the downlink beam reference signal. The first correspondence indicates a correspondence between the identifier of the reference signal resource of the terminal device and the information indicating whether the beam of the terminal device has beam correspondence, that is, the first correspondence may indicate whether beam correspondence exists between the uplink reference signal and the downlink reference signal that correspond to the reference signal resource with the same identifier.

Optionally, a manner in which the first communication apparatus determines the first correspondence based on the uplink beam pattern and the downlink beam pattern may be as follows: The first communication apparatus first determines, based on the downlink beam pattern and the uplink beam pattern, the beam correspondence between the uplink reference signal and the downlink reference signal of the reference signal resource with the same identifier. Then, the first communication apparatus records that the correspondence between the identifier of the reference signal resource and the beam correspondence between the uplink reference signal and the downlink reference signal of the reference signal resource is the first correspondence.

Optionally, a manner of determining the beam correspondence between the uplink reference signal and the downlink reference signal of the reference signal resource with the same identifier may be: The first communication apparatus may first separately sort the downlink beam pattern and the uplink beam pattern in descending or ascending order of power, to separately obtain a downlink reference signal identifier sequence and an uplink reference signal identifier sequence. Then, the first communication apparatus compares the downlink reference signal identifier sequence with the uplink reference signal identifier sequence, and determines that beam correspondence exists between the uplink reference signal and the downlink reference signal that correspond to the reference signal resource with the same identifier and a same rank, and that no beam correspondence exists between an uplink reference signal and a downlink reference signal that correspond to reference signal resources with other identifiers.

Optionally, the beam correspondence between the uplink reference signal and the downlink reference signal of the reference signal resource may also be recorded based on a QCL relationship between the uplink reference signal and the downlink reference signal of the reference signal resource. The QCL relationship may include having beam correspondence and having no beam correspondence. The QCL relationship may be indicated by a character. For example, having beam correspondence may be indicated by "BC", and having no beam correspondence may be indicated by "no-BC".

For example, beam angle IDs of each of the uplink beam pattern and the downlink beam pattern of the terminal device include 0 to 2. Reference signals in the downlink beam pattern and the uplink beam pattern are separately ranked in descending order of signal strengths, to obtain rankings of downlink beam angle IDs and uplink beam angle IDs, as shown in Table 1. By comparing the rankings of the uplink beam angle IDs with the rankings of the downlink beam angle IDs, it can

15

be learned that a beam angle whose ID is 0 ranks first in both the uplink beam angle IDs and the downlink beam angle IDs, and beam angles whose IDs are 1 and 2 rank differently in the uplink and the downlink. In this case, the first communication apparatus may determine that an uplink reference signal and a downlink reference signal that correspond to a reference signal resource whose beam angle ID is 0 have beam correspondence, and an uplink reference signal and a downlink reference signal that correspond to reference signal resources whose beam angle IDs are 1 and 2 have no beam correspondence. Then, the first communication apparatus may record the first correspondence based on the correspondence of the reference signal. The first correspondence may be shown in Table 2. A QCL relationship of the reference signal resource whose beam angle ID is 0 is "BC", and QCL relationships of the reference signal resources whose beam angle IDs are 1 and 2 are "no-BC".

Table 1

| Uplink beam angle ID | Downlink beam angle ID | Whether beam correspondence exists |
|---|---|---|
| 0 | 0 | Yes |
| 2 | 1 | No |
| 1 | 2 | No |

Table 2

| Reference signal resource identifier | QCL relationship |
|---|---|
| 0 | BC |
| 2 | no-BC |
| 1 | no-BC |

Case 2: The first identifier is the identifier of the beam of the terminal device, and the identifier of the beam of the terminal device may be a beam identifier of an uplink beam or a beam identifier of a downlink beam. The first correspondence indicates a correspondence between the identifier of the beam of the terminal device and the information indicating whether the beam of the terminal device has beam correspondence, that is, the first correspondence may indicate whether beam correspondence exists between the uplink beam and the downlink beam that correspond to the same beam identifier.

Optionally, one reference signal resource may correspond to a plurality of beams. A manner in which the first communication apparatus determines the first correspondence based on the uplink beam pattern and the downlink beam pattern may be: The first communication apparatus may first determine, based on beam correspondence between the uplink reference signal and the downlink reference signal that correspond to a reference signal resource, beam correspondence between the uplink beam and the downlink beam of beams corresponding to the reference signal resource. Finally, the first communication apparatus records that a correspondence between the identifier of the beam and the beam correspondence between the uplink beam and the downlink beam corresponding to the beam with the identifier is the first correspondence.

For example, beam correspondence between uplink beams and downlink beams of beams corresponding to reference signal resources determined by the first communication apparatus based on beam correspondence between uplink reference signals and downlink reference signals that correspond to the reference signal resources may be shown in Table 3. Beam angle IDs of each of the uplink beam pattern and the downlink beam pattern of the terminal device include 0 to 2. Beams corresponding to a beam angle whose ID is 0 include a beam 0 and a beam 1, beams corresponding to a beam angle whose ID is 1 include a beam 4 and a beam 5, and beams corresponding to a beam angle whose ID is 2 is a beam 2 and a beam 3. Reference signals in the downlink beam pattern and the uplink beam pattern are separately ranked in descending order of signal strengths, to obtain rankings of downlink beam angle IDs and uplink beam angle IDs, as shown in Table 3. By comparing the rankings of the downlink beam angle IDs with the rankings of the uplink beam angle IDs, it can be learned that a beam angle whose ID is 0 ranks first in both the uplink beam angle IDs and the downlink beam angle IDs, and beam angles whose IDs are 1 and 2 rank differently in the uplink and downlink beam angle IDs. In this case, the first communication apparatus may determine that an uplink reference signal and a downlink reference signal that correspond to a reference signal resource whose beam angle ID is 0 have beam correspondence, and an uplink reference signal and a downlink reference signal that correspond to reference signal resources whose beam angle IDs are 1 and 2 have no beam correspondence. Correspondingly, the first communication apparatus may determine, based on the beam correspondence of the reference signal resource, that the uplink beam and the downlink beam of the beam 0 and the beam 1 have beam correspondence, and the uplink beam and the downlink beam of the beam 2 to the beam 5 have no beam correspondence. Then, the first communication apparatus may record the first correspondence based on the correspondence of the beams. The first correspondence may be shown in Table 4. A QCL relationship of the beam 0 and the beam 1 is "BC", and a QCL relationship of the beam 2 to the beam 5 is "no-BC".

Table 3

| Uplink beam angle ID | Uplink beam identifier | Downlink beam angle ID | Downlink beam identifier | Whether beam correspondence exists |
|---|---|---|---|---|
| 0 | Beam 0 | 0 | Beam 0 | Yes |
| | Beam 1 | | Beam 1 | |
| 2 | Beam 2 | 1 | Beam 4 | No |
| | Beam 3 | | Beam 5 | |
| 1 | Beam 4 | 2 | Beam 2 | No |
| | Beam 5 | | Beam 3 | |

Table 4

| Beam identifier | QCL relationship |
|---|---|
| Beam 0 | BC |
| Beam 1 | BC |
| Beam 2 | no-BC |
| Beam 3 | no-BC |
| Beam 4 | no-BC |
| Beam 5 | no-BC |

In a second possible form, the first information is a bitmap, and the bitmap indicates whether the beam of the terminal device has beam correspondence.

Performing beam calibration by setting the first information to the bitmap helps the terminal device determine a beam having beam correspondence, thereby improving beam calibration efficiency.

Optionally, if a bit is 1, it indicates that the beam of the terminal device has beam correspondence, and if the bit is 0, it indicates that the beam of the terminal device has no beam correspondence.

It should be understood that, when the first information is the bitmap, the first communication apparatus determines the first information, that is, the first communication apparatus determines the bitmap.

The bitmap may include the following two cases.

Case 1: The quantity of bits included in the bitmap is equal to the quantity of reference signal resources of the terminal device.

Optionally, a manner in which the first communication apparatus determines the bitmap based on the uplink beam pattern and the downlink beam pattern may be: The first communication apparatus may first separately rank the downlink beam pattern and the uplink beam pattern in descending or ascending order of power, to separately obtain rankings of downlink beam angle IDs and uplink beam angle IDs. Then, the first communication apparatus compares the rankings of the downlink beam angle IDs with the rankings of the uplink beam angle IDs, determines that bits of beam angle IDs that ranks the same and whose beam angle IDs are the same are 1, indicating that beam correspondence exists between the uplink reference signal and the downlink reference signal of the reference signal resource of the beam angle IDs, and determines that bits of reference signals of other beam angle IDs are 0, indicating that no correspondence exists between an uplink reference signal and a downlink reference signal that correspond to the other beam angle IDs.

It should be understood that one reference signal resource may correspond to a plurality of beams. The first communication apparatus may determine beam correspondence of a plurality of reference signal resources based on the bitmap of the reference signal resources, and then determine beam correspondence of a plurality of beams corresponding to each reference signal resource based on beam correspondence of the reference signal resource. In other words, when the reference signal resource has the beam correspondence, the beams corresponding to the reference signal resource also has beam correspondence.

For example, beam angle IDs of each of the uplink beam pattern and the downlink beam pattern of the terminal device include 0 to 3. Reference signals in the downlink beam pattern and the uplink beam pattern are separately ranked in descending order of signal strengths, to obtain rankings of downlink beam angle IDs and uplink beam angle IDs, as shown in Table 5. By comparing the rankings of the downlink beam angle IDs with the rankings of the uplink beam angle IDs, it can be learned that a beam angle whose ID is 0 ranks first in both the uplink beam angle IDs and the downlink beam angle IDs, beam angles whose IDs are 1 and 2 rank differently in the uplink and downlink beam angle IDs, and a beam angle whose ID is 3 ranks fourth in both the uplink beam angle IDs and the downlink beam angle IDs In this case, the first communication apparatus may determine that the bitmap is "1001", indicating that reference signal resources whose beam angle IDs are 0 and 3 have beam correspondence, and reference signal resources whose beam angle IDs are 2 and 3 have no beam correspondence.

Table 5

| Uplink beam angle ID | Downlink beam angle ID | Bitmap |
|---|---|---|
| 0 | 0 | 1 |
| 2 | 1 | 0 |
| 1 | 2 | 0 |
| 3 | 3 | 1 |

It should be understood that, in the foregoing example, an $n^{th}$ bit in the bitmap indicates beam correspondence of $(n-1)^{th}$ reference signal resources. When the bitmap is 101110, it indicates that reference signal resources whose beam angle IDs are 0 and 2 to 4 (that is, the first and second to fifth bits) have beam correspondence, and reference signal resources whose beam angle IDs are 1 and 5 (that is, the second and sixth bits) have no beam correspondence.

Case 2: The quantity of bits included in the bitmap is equal to the quantity of beams of the terminal device.

Optionally, one reference signal resource may correspond to a plurality of beams. A manner in which the first communication apparatus determines the bitmap based on the uplink beam pattern and the downlink beam pattern may be: The first communication apparatus first determines the bitmap whose quantity of bits is equal to the quantity of reference signal resources, and then determines the bitmap whose quantity of bits is equal to the quantity of beams based on a correspondence between reference signal resources and beams.

For example, in the example of Case 1, the bitmap whose quantity of bits is equal to a quantity of reference signal resources is 1001, and the correspondence between the reference signal resources and the beams may be shown in Table 6. Beams corresponding to a reference signal resource 0 may be a beam 0 and a beam 1, beams corresponding to a reference signal resource 1 may be a beam 4 and a beam 5, beams corresponding to a reference signal resource 2 may be a beam 2 and a beam 3, and beams corresponding to a reference signal resource 3 may be a beam 6 and a beam 7. The bitmap whose quantity of bits is equal to a quantity of reference signal resources is "1001", and the bitmap whose quantity of bits is equal to a quantity of beams is "11000011".

Table 6

| Reference signal resource identifier | Bitmap | Beam identifier | Bitmap |
|---|---|---|---|
| 0 | 1 | Beam 0 | 1 |
|   |   | Beam 1 | 1 |
| 2 | 0 | Beam 2 | 0 |
|   |   | Beam 3 | 0 |
| 1 | 0 | Beam 4 | 0 |
|   |   | Beam 5 | 0 |
| 3 | 1 | Beam 6 | 1 |
|   |   | Beam 7 | 1 |

In a third possible form, the first information is an array, the array includes at least one element, and the at least one element each indicates a similarity between at least one beam of the terminal device as an uplink beam and the at least one beam as a downlink beam, where the at least one beam of the terminal device has beam correspondence.

Performing beam calibration by setting the first information to the array helps the terminal device determine a beam having beam correspondence, thereby improving beam calibration efficiency.

It should be understood that, when the first information is the array, the first communication apparatus determines the first information, that is, the first communication apparatus determines the array.

The array may include the following two cases.

Case 1: An element in the array indicates a similarity between an uplink reference signal and a downlink reference signal that correspond to at least one reference signal resource having beam correspondence.

Optionally, a manner in which the first communication apparatus determines the array based on the uplink beam pattern and the downlink beam pattern may be as follows: The first communication apparatus first determines, based on the downlink beam pattern and the uplink beam pattern, beam correspondence between the uplink reference signal and the downlink reference signal of reference signal resources with a same identifier. Then, the first communication apparatus may select a reference signal resource whose uplink reference signal and downlink reference signal have beam correspondence. Then, the first communication apparatus uses a ratio of a signal strength of the uplink reference signal corresponding to the reference signal resource having beam correspondence to a signal strength of the downlink reference signal corresponding to the reference signal resource having beam correspondence as an element in the array.

It should be understood that the first communication apparatus may determine a ratio of a signal strength of an uplink reference signal corresponding to a reference signal resource having no beam correspondence to a signal strength of a downlink reference signal corresponding to the reference signal resource having no beam correspondence as 0, and use the ratio as an element in the array.

Table 7

| Uplink beam angle ID | Signal strength | Downlink beam angle ID | Signal strength | Similarity |
|---|---|---|---|---|
| 0 | 35 | 0 | 40 | 0.875 |
| 2 | 30 | 1 | 35 | / |
| 1 | 25 | 2 | 22 | / |
| 3 | 20 | 3 | 20 | 1 |

For example, reference signal statuses of the uplink beam pattern and the downlink beam pattern of the terminal device may be shown in Table 7. Beam angle IDs of each of the uplink beam pattern and the downlink beam pattern of the terminal device include 0 to 3. Reference signals in the downlink beam pattern and the uplink beam pattern are separately ranked in descending order of signal strengths, to obtain rankings of downlink beam angle IDs and uplink beam angle IDs, as shown in Table 7. By comparing the rankings of the downlink beam angle IDs with the rankings of the uplink beam angle IDs, it can be learned that reference signal resources whose beam angle IDs are 0 and 3 have beam correspondence. Corresponding similarities of 0.875 and 1 are obtained by comparing signal strengths of uplink reference signals corresponding to reference signal resources whose beam angle IDs are 0 and 3 with signal strengths of downlink reference signals corresponding to the reference signal resources whose beam angle IDs are 0 and 3. 0.875 and 1 are used as elements in an array, and the array is {0.875, 0, 0, 1}.

Case 2: An element in the array indicates a similarity between at least one beam of the terminal device as an uplink beam and the at least one beam of the terminal device as a downlink beam, where the at least one beam of the terminal device has beam correspondence.

Optionally, one reference signal may correspond to a plurality of beams, a manner in which the first communication apparatus determines the array based on the uplink beam pattern and the downlink beam pattern may be as follows: The first communication apparatus first determines, based on the downlink beam pattern and the uplink beam pattern, beam correspondence between an uplink reference signal and a downlink reference signal of a reference signal resource with a same identifier. Then, the first communication apparatus may select a reference signal resource whose uplink reference signal and downlink reference signal have beam correspondence. Then, a ratio of a signal strength of a beam as an uplink beam to a signal strength of the beam as a downlink beam is used as an element in the array, where the beam corresponds to the reference signal resource has beam correspondence.

It should be understood that the first communication apparatus may determine a ratio of a signal strength of an uplink reference signal corresponding to a reference signal resource having no beam correspondence to a signal strength of a downlink reference signal corresponding to the reference signal resource having no beam correspondence as 0, and use the ratio as an element in the array.

For example, reference signal statuses of the uplink beam pattern and the downlink beam pattern of the terminal device may be shown in Table 8. Beam angle IDs of each of the uplink beam pattern and the downlink beam pattern of the terminal device include 0 to 3. Reference signals in the downlink beam pattern and the uplink beam pattern are separately ranked in descending order of signal strengths, to obtain rankings of downlink beam angle IDs and uplink beam angle IDs, as shown in Table 8. By comparing the rankings of the downlink beam angle IDs with the rankings of the uplink beam angle IDs, it can be learned that reference signal resources whose beam angle IDs are 0 and 3 have beam correspondence. A similarity of 0.875 corresponding to a beam 0, a similarity of 0.871 corresponding to a beam 1, and a similarity of 1 corresponding to a beam 6 and a beam 7 are obtained by comparing signal strengths of beams as uplink beams with signal strengths of the beams as downlink beams, where the beams correspond to reference signal resources whose beam angle IDs are 0 and 3. 0.875 and 1 are used as elements in an array, and the array is {0.875, 0.871, 0, 0, 0, 0, 1, 1}.

Table 8

| Uplink beam angle ID | Beam identifier | Signal strength | Downlink beam angle ID | Beam identifier | Signal strength | Similarity |
|---|---|---|---|---|---|---|
| 0 | Beam 0 | 35 | 0 | Beam 0 | 40 | 0.875 |
| | Beam 1 | 34 | | Beam 1 | 39 | 0.871 |
| 2 | Beam 2 | 30 | 1 | Beam 4 | 35 | / |
| | Beam 3 | 29 | | Beam 5 | 34 | / |
| 1 | Beam 4 | 25 | 2 | Beam 2 | 22 | / |
| | Beam 5 | 24 | | Beam 5 | 21 | / |
| 3 | Beam 6 | 20 | 3 | Beam 6 | 20 | 1 |
| | Beam 7 | 19 | | Beam 7 | 19 | 1 |

In a fourth possible form, the first information is a calibration vector, and the calibration vector minimizes a measurement error of the uplink beam pattern and a measurement error of the downlink beam pattern; and a dimension of the calibration vector is equal to a quantity of beams of the terminal device, or a dimension of the calibration vector is equal to a quantity of reference signal resources of the terminal device.

The downlink beam pattern may be calibrated by using the calibration vector by setting the first information to the calibration vector, so that a calibrated beam has beam correspondence, and all beams at a terminal device side or a network device side can have a beam correspondence capability, thereby helping avoid a delay and overhead problem caused by uplink beam management performed by the terminal device or the network device, and helping reduce power consumption of the terminal device or the network device. In addition, calibration of beam correspondence helps avoid a network rollback problem that occurs when the terminal device reduces a device temperature when the temperature of the terminal device is high, thereby improving millimeter wave utilization.

It should be understood that, when the first information is the calibration vector, the first communication apparatus determines the first information, that is, the first communication apparatus determines the calibration vector.

Optionally, the uplink beam pattern is an uplink beam pattern measured by the terminal device, the downlink beam pattern is a downlink beam pattern measured by the terminal device, the measurement error of the uplink beam pattern and the measurement error of the downlink beam pattern are minimized by setting a constraint as that a calibration vector exists between the measured uplink beam pattern and the measured downlink beam pattern, and the calibration vector is calculated.

For example, a calibration vector P in a case of $\min_{P} \sum_{k=1}^{K} \left\| E_{\mathrm{DL}}\left(\theta_{k}\right) \right\|_{F}^{2} + \left\| E_{\mathrm{UL}}\left(\theta_{k}\right) \right\|_{F}^{2}$ is calculated by setting $s.t. \hat{B}_{\mathrm{DL}}^{\mathrm{eff}}(\theta_{k}) + E_{\mathrm{DL}} = P(\theta_{k}) \times \left( \hat{B}_{\mathrm{UL}}^{\mathrm{eff}}(\theta_{k}) + E_{\mathrm{UL}} \right)$. $\overline{B}_{\mathrm{DL}}^{\mathrm{eff}} = \hat{B}_{\mathrm{DL}}^{\mathrm{eff}} + E_{\mathrm{DL}}$, and $\overline{B}_{\mathrm{UL}}^{\mathrm{eff}} = \hat{B}_{\mathrm{UL}}^{\mathrm{eff}} + E_{\mathrm{UL}}$. $\overline{\mathrm{B}}_{\mathrm{UL}}^{\mathrm{eff}}$ may be a measured uplink beam pattern, $\overline{\mathrm{B}}_{\mathrm{DL}}^{\mathrm{eff}}$ may be a measured downlink beam pattern, $\hat{\mathrm{B}}_{\mathrm{UL}}^{\mathrm{eff}}$ may be a true uplink beam pattern, $\hat{\mathrm{B}}_{\mathrm{DL}}^{\mathrm{eff}}$ may be a true downlink beam pattern one-dimensional matrix, $E_{\mathrm{UL}}$ may be a measurement error of the uplink beam pattern, and $E_{\mathrm{DL}}$ may be a measurement error of the downlink beam pattern. $\theta_{k}$ indicates a $k^{\mathrm{th}}$ beam, K is a total quantity of beams, and $1 \le k \le K$.

In a fifth possible form, the first information includes a beam width indicating an uplink beam of the terminal device; the downlink beam pattern includes a downlink wide beam pattern of the terminal device and a downlink narrow beam pattern of the terminal device. That the first communication apparatus determines the first information based on the downlink beam pattern and the uplink beam pattern includes: determining, based on the downlink wide beam pattern and the uplink beam pattern, whether a wide beam of the terminal device has beam correspondence; determining, based on the downlink narrow beam pattern and the uplink beam pattern, whether a narrow beam of the terminal device has beam correspondence; and when all wide beams of the terminal device have beam correspondence and a beam in a narrow beam of the terminal device has no beam correspondence, obtaining the first information based on a width of the wide beam and a width of the narrow beam.

The first information indicates the beam width of the uplink beam of the terminal device, and the uplink beam determined based on the first information not only has beam correspondence, but also can improve a gain of a signal transmitted through the beam. After a beam width is determined, the terminal device and the network device establish communication based on a beam with the width. This helps avoid delay and overhead problems caused by uplink beam management by the terminal device or the network device, and helps reduce power consumption of the terminal device or the network device. In addition, calibration of beam correspondence helps avoid a network rollback problem that happens to the terminal device for reducing a device temperature when the temperature of the terminal device is high, thereby improving millimeter wave utilization.

It should be understood that the wide beam may be used by the terminal device to receive a reference signal sent by the network device based on a system information block (SSB), and the narrow beam may be used by the terminal device to receive a channel state information (channel state information, CSI) reference signal.

It should be further understood that a manner in which the first communication apparatus determines, based on the downlink wide beam pattern and the uplink beam pattern, whether the wide beam of the terminal device has beam correspondence, and a manner in which the first communication apparatus determines, based on the downlink narrow beam pattern and the uplink beam pattern, whether the narrow beam of the terminal device has beam correspondence are the same as the manner in which the first communication apparatus determines, based on the downlink beam pattern and the uplink beam pattern, whether the beam has beam correspondence. Details are not described herein again.

Optionally, that the first communication apparatus obtains the first information based on the width of the wide beam and the width of the narrow beam includes: First, after obtaining the downlink wide beam pattern of the terminal device, the first communication apparatus performs interpolation on each wide beam in the wide beam pattern, to obtain a plurality of first downlink beam patterns with a first width. After obtaining the downlink narrow beam pattern of the terminal device, the first communication apparatus performs interpolation on each narrow beam in the narrow beam pattern, to obtain a plurality of second downlink beam patterns with the first width. Then, the first communication apparatus performs weighted summation on a first beam pattern with the first width and a plurality of second beam patterns with the first width, to obtain a third downlink beam pattern with the first width. Then, the first communication apparatus obtains a plurality of downlink beam patterns with different widths based on a configured quantity of interpolated parts and the third beam pattern with the first width. The first communication apparatus separately determines, based on the plurality of downlink beam patterns with different widths and the uplink beam pattern, whether a plurality of beams with different widths of the terminal device have beam correspondence. Finally, the first communication apparatus uses a beam width of the narrowest beam in beams having beam correspondence as the beam width that is of the uplink beam of the terminal device and that is indicated by the first information.

It should be understood that a manner in which the first communication apparatus determines, based on the plurality of downlink beam patterns with different widths and the uplink beam pattern, whether the plurality of beams with different widths of the terminal device have beam correspondence is the same as the manner in which the first communication apparatus determines, based on the downlink beam pattern and the uplink beam pattern, whether the beam has beam correspondence. Details are not described herein again.

It should be understood that, that the first communication apparatus determines whether the wide beam and the narrow beam of the terminal device have beam correspondence may further include another case: A beam having no beam correspondence exists in both wide beams of the terminal device and narrow beams of the terminal device, or both the wide beam and the narrow beam of the terminal device have beam correspondence. When a beam having no beam correspondence exists in both the wide beams of the terminal device and the narrow beams of the terminal device, the first communication apparatus may determine that there is no beam with an appropriate width for communication, and the terminal device needs to perform beam sweeping to determine an uplink beam when accessing the network device, or the terminal device determines an uplink beam by using the calibration vector after calculating the calibration vector. When both the wide beam and the narrow beam of the terminal device have beam correspondence, the first communication apparatus determines that the beam width that is of the uplink beam of the terminal device and that is indicated by the first information is a beam width corresponding to the narrow beam.

For example, the terminal device obtains a downlink wide beam pattern of the terminal device by receiving an SSB downlink reference signal, where the downlink wide beam pattern includes wide beams in five directions in total, and a width of each wide beam is 10°. The terminal device performs interpolation on the wide beams in the five directions to obtain 50 beams whose beam widths are 1°, where each wide beam corresponds to 10 beams whose beam widths are 1°, and a signal strength of the 1° beam corresponding to the wide beam is $R_1$. The terminal device obtains a downlink narrow beam pattern of the terminal device by receiving a CSI downlink reference signal, where the downlink narrow beam pattern includes narrow beams in five directions in total, and a width of each wide beam is 6°. The terminal device performs interpolation on the narrow beams in the five directions to obtain 30 beams whose beam widths are 1°, where each narrow beam corresponds to six beams whose beam widths are 1°, and a signal strength of the 1° beam corresponding to the

narrow beam is $R_2$. Then, the 1° beam corresponding to the wide beam and the 1° beam corresponding to the narrow beam are weighted and summed, to obtain a beam whose beam width is 1° after interpolation is performed on the wide beam and the narrow beam. A signal strength R of an interpolated beam whose beam width is 1° is $0.2 \times R_1 + 0.8 \times R_2$, where 0.2 is a weight of the wide beam, and 0.8 is a weight of the narrow beam. Finally, a signal strength of a beam whose width is 7° is calculated as $\frac{8+9}{7+8+9} \times R$ based on the interpolated beam whose beam width is 1°, a signal strength of a beam whose width is 8° is calculated as $\frac{7+9}{7+8+9} \times R$, and a signal strength of a beam whose width is 9° is calculated as $\frac{7+8}{7+8+9} \times R$.

In an optional embodiment, when the first communication apparatus determines, after comparing the uplink beam pattern with the downlink beam pattern of the terminal device, that a quantity of beams having beam correspondence or a quantity of reference signal resources having beam correspondence is greater than or equal to a first preset threshold, the first information may be the first correspondence, the bitmap, or the array.

It should be understood that the first preset threshold is less than the total quantity of beams or the total quantity of reference signal resources.

For example, when the total quantity of beams is 5, the first preset threshold may be 3, and the quantity of beams having beam correspondence is greater than or equal to 3, the first information may be the first correspondence, the bitmap, or the array.

Optionally, the first communication apparatus may include two different scenarios.

Scenario 1: The first communication apparatus is the network device, and the method further includes: The network device sends the first information to the terminal device.

It should be understood that, when the first communication apparatus is the network device, after determining the first information, the network device sends the first information to the terminal device, so that the terminal device can determine an uplink beam of the terminal device based on the first information. The uplink beam of the terminal device may also be an uplink transmit beam of the terminal device.

Scenario 2: The first communication apparatus is the terminal device, and the method further includes: The terminal device determines an uplink beam of the terminal device based on the first information.

It should be understood that, when the first communication apparatus is the terminal device, after determining the first information, the terminal device may directly determine the uplink beam of the terminal device based on the first information.

Optionally, the method further includes: The terminal device receives a plurality of downlink reference signals from the network device, and measures the plurality of downlink reference signals to obtain a measurement result, where the measurement result includes information indicating a downlink received signal strength of each beam of the terminal device; and the terminal device determines the uplink beam of the terminal device based on the first information includes: The terminal device determines the uplink beam of the terminal device based on the first information and the measurement result.

It should be understood that the measurement result may alternatively be a downlink beam pattern.

Specifically, that the terminal device determines the uplink beam of the terminal device based on the first information and the measurement result may include the following plurality of implementations.

In a possible implementation, the first information is the first correspondence, and the terminal device compares downlink received signal strengths of beams having beam correspondence in the first correspondence, and uses a beam with a highest downlink received signal strength as the uplink beam of the terminal device.

For example, it is determined that the beams having beam correspondence in the first correspondence include a beam 0, a beam 2, and a beam 3. The terminal device obtains, through measurement, that signal strengths of downlink reference signals received through the beam 0, the beam 2, and the beam 3 are sequentially 30, 40, and 35. After comparison, the terminal device determines to use the beam 3 as the uplink beam of the terminal device.

In another possible implementation, the first information is the bitmap, and the terminal device determines downlink received signal strengths of beams having beam correspondence in the bitmap, and uses a beam with a highest downlink received signal strength as the uplink beam of the terminal device.

For example, the bitmap may be "1001". Based on the bitmap, the terminal device determines that the beam 0 and the beam 3 have beam correspondence. The terminal device obtains, through measurement, that signal strengths of downlink reference signals received through the beam 0 and the beam 3 are sequentially 30 and 40. After comparison, the terminal device determines to use the beam 3 as the uplink beam of the terminal device.

In still another possible implementation, the first information is the array, and the terminal device determines an uplink signal strength based on the array and the downlink received signal strength, and determines an uplink beam with a highest uplink signal strength as the uplink beam of the terminal device.

For example, the array may be "1, 0.8, 0", and the terminal device obtains, through measurement, that signal strengths of downlink reference signals received through the beam 0 and the beam 1 is sequentially 30 and 40. It is obtained based on the array and the measurement result through calculation that an uplink signal strength of the beam 0 is $30 \times 1=30$, and an uplink signal strength of the beam 1 is $40 \times 0.8=32$. The terminal device determines to use the beam 2 as the uplink beam of the terminal device.

In yet another possible implementation, the first information is a calibration vector. The terminal device calibrates the measurement result by using the calibration vector, and determines a calibrated beam with a highest downlink received signal strength as the uplink beam of the terminal device.

Optionally, the terminal device receives the measurement result to obtain a downlink beam pattern, calibrates the downlink beam pattern by using the calibration vector, to obtain a calibrated downlink beam pattern, and compares signal strengths of beams in the calibrated downlink beam pattern, and determines a beam with a highest signal strength as the uplink beam of the terminal device.

For example, a downlink beam pattern $E_D$ obtained by the terminal device may be indicated by a one-dimensional matrix: $E_D=[30, 40, 50, 35]$, where corresponding beams are a beam 0, a beam 1, a beam 2, and a beam 3, and a calibration vector $P=[2, 4, 8, 6]$. After calibrating the downlink beam pattern $E_D$, the terminal device obtains a calibrated downlink beam pattern $E_D'=E_D \times P=[30, 40, 50, 35] \cdot [2, 4, 8, 6]=[60, 160, 400, 210]$. The terminal device selects the beam 2 with the signal strength as the uplink beam of the terminal device.

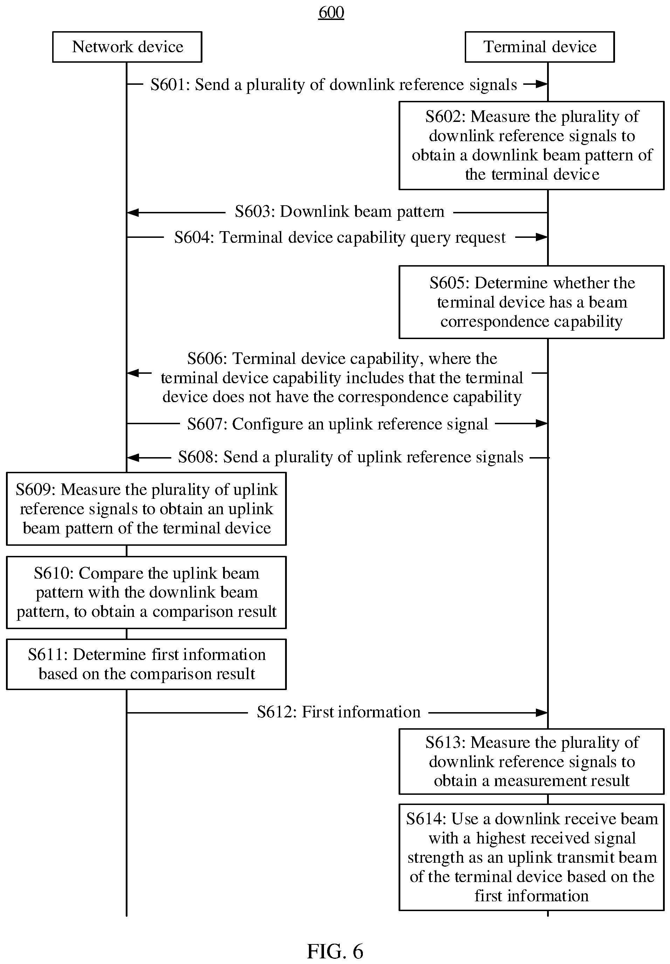

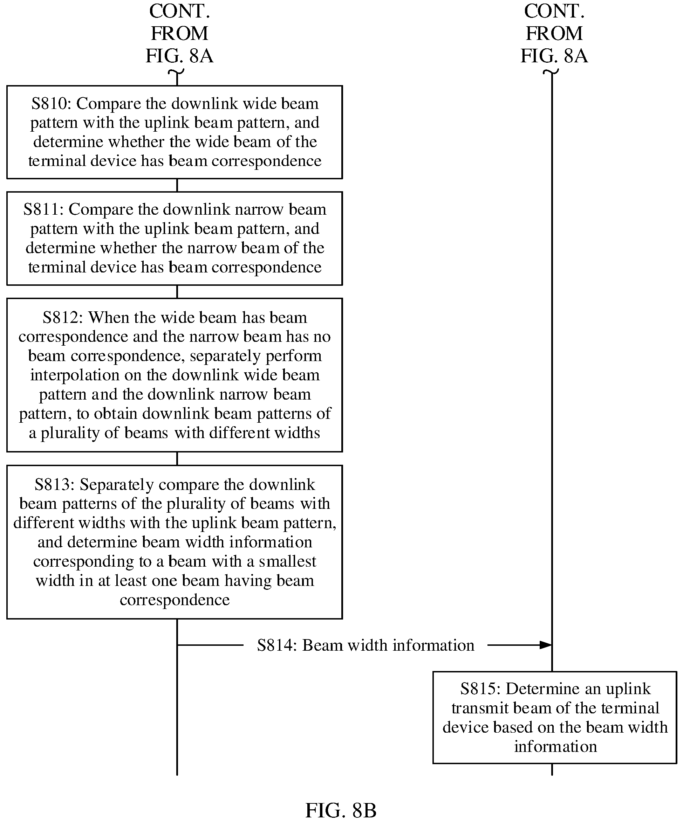

The foregoing describes the beam calibration method according to the embodiments of this application with reference to FIG. 4 to FIG. 5. The following describes a beam calibration interaction process provided in embodiments of this application with reference to FIG. 6 to FIG. 8A and FIG. 8B by using an example in which a first communication apparatus is a terminal device.

The beam calibration interaction process in these embodiments of this application includes the following three cases.

Case 1: The network device determines first information, where the first information may be a first correspondence, a bitmap, or an array. The terminal device determines an uplink beam of the terminal device based on the first information.

FIG. 6 shows a beam calibration method 600 according to this application.

S601: A network device sends a plurality of downlink reference signals to a terminal device, and correspondingly, the terminal device receives the plurality of downlink reference signals.

S602: The terminal device measures the plurality of downlink reference signals to obtain a downlink beam pattern of the terminal device.

S603: The terminal device sends the downlink beam pattern to the network device, and correspondingly, the network device receives the downlink beam pattern.

S604: The network device sends a terminal device capability query request, and correspondingly, the terminal device receives the capability query request.

For example, during initial access, the network device sends a radio resource management user equipment capability information (RRC UE Capability enquiry) signaling message to the terminal device, and requires UE to report a capability of the UE.

S605: The terminal device determines whether the terminal device has a beam correspondence capability.

Optionally, after determining the downlink receive beam, the terminal device uses the downlink receive beam as an uplink transmit beam, and attempts to communicate with the network device. After a quantity of communication failures exceeds a preset threshold, the terminal device determines that the terminal device does not have the beam correspondence capability.

Optionally, the terminal device may measure signal strengths of downlink receive beams, and use a beam with a highest signal beam strength as the downlink receive beam.

S606: The terminal device reports a terminal device capability to the network device, where the terminal device capability includes that the terminal device does not have the correspondence capability.

Optionally, the terminal device capability further includes a network capability of the terminal device. For example, the network device may be a base station, and the terminal device may be UE. The UE packs its capability and reports the capability to gNB by using the radio resource management user equipment capability information (RRC UE capability information). The UE capability information may include a plurality of containers (containers), and each container may include a UE capability corresponding to NR or Eutra. NR corresponds to reporting of a UE Capability of NR (that is, reporting of a 5G capability), and Eutra corresponds to reporting of a UE Capability of LTE (that is, reporting of a 4G capability).

S607: The network device sends a configuration indication of an uplink reference signal to the terminal device, and correspondingly, the terminal device receives the configuration indication.

S608: The terminal device sends a plurality of uplink reference signals to the network device based on the configuration indication, and correspondingly, the network device receives the plurality of uplink reference signals.

S609: The network device measures the plurality of uplink reference signals to obtain an uplink beam pattern of the terminal device.

S610: The network device compares the uplink beam pattern with the downlink beam pattern, to obtain a comparison result.

It should be understood that the comparison result may be information about whether an uplink reference signal and a downlink reference signal that correspond to a reference signal resource have beam correspondence. For example, the comparison result may be that an uplink beam and a downlink beam that correspond to a reference signal resource whose identifier is 0 have no beam correspondence.

S611: The network device determines first information based on the comparison result.

Optionally, the first information may be a first correspondence, a bitmap, or an array.

S612: The network device sends the first information to the terminal device, and correspondingly, the terminal device receives the first information.

Optionally, when duration from a current moment to a moment when the network device sends the downlink reference signals to the terminal device in S601 is beyond preset duration, or the terminal device is interfered, the network device may send the downlink reference signals to the terminal device again, and correspondingly, the terminal device receives the downlink reference signal.

It should be understood that the interference received by the terminal device may be interference caused by a form change of the terminal device, or may be interference caused by an environmental factor. This is not limited in this application.

S613: The terminal device measures the plurality of downlink reference signals to obtain a measurement result.

S614: The terminal device uses a downlink receive beam with a highest received signal strength as an uplink transmit beam of the terminal device based on the first information.

Case 2: The network device determines first information, where the first information may be a calibration vector. The terminal device determines an uplink beam of the terminal device by using the calibration vector.

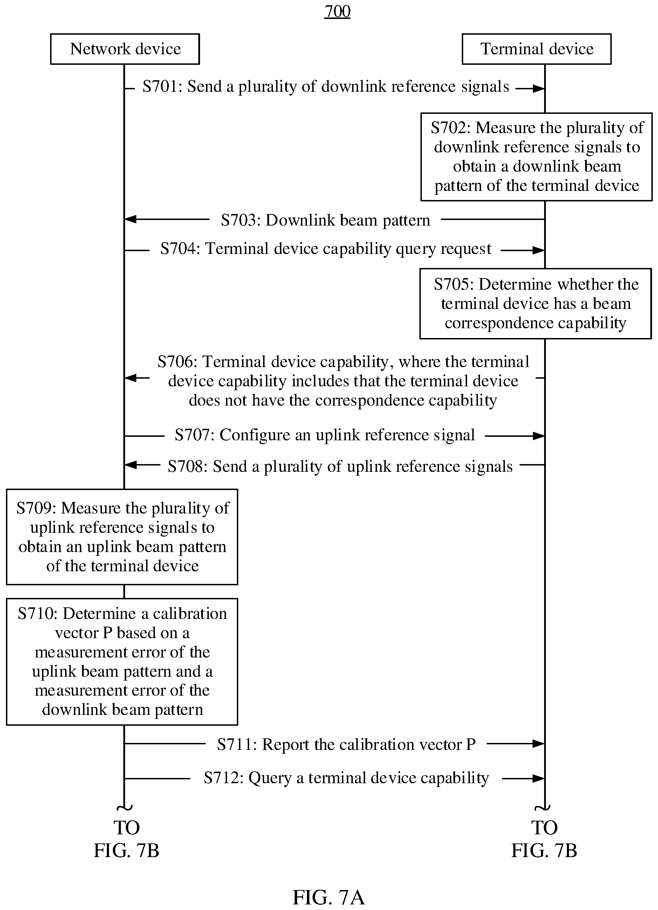

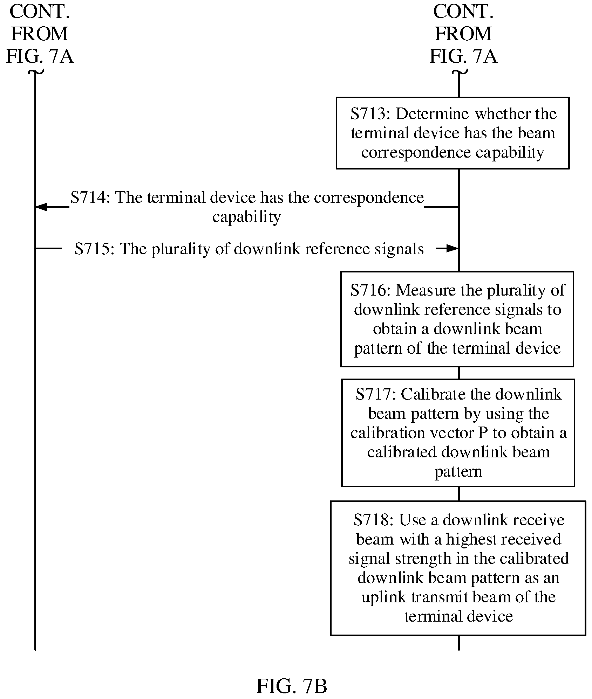

FIG. 7A and FIG. 7B show a beam calibration method 700 according to this application.

S701 to S709 are in a one-to-one correspondence with S601 to S609 in the method 600. Details are not described herein again. The following steps are described from S710.

S710: A network device determines a calibration vector P based on a measurement error of an uplink beam pattern and a measurement error of a downlink beam pattern.

S711: The network device sends the calibration vector P to a terminal device, and correspondingly, the terminal device receives the calibration vector P.

Optionally, in S712, when the terminal device attempts to access the network device again, the network device sends a capability query request to the terminal device again, and correspondingly, the terminal device receives the capability query request.

S713: The terminal device determines whether the terminal device has a beam correspondence capability.

It should be understood that when determining whether the terminal device has the beam correspondence capability, the terminal device checks whether the calibration vector P is received. After determining that the calibration vector P is received, the terminal device determines the beam correspondence capability of the terminal device.

S714: The terminal device reports a terminal device capability to the network device, where the terminal device capability includes that the terminal device has the correspondence capability.

S715: The network device sends the plurality of downlink reference signals to the terminal device, and correspondingly, the terminal device receives the plurality of downlink reference signals.

It should be understood that when the terminal device attempts to access the network device again, the network device needs to send the plurality of downlink reference signals to the terminal device again.

S716: The terminal device measures the plurality of downlink reference signals to obtain a downlink beam pattern of the terminal device.

S717: The terminal device calibrates the downlink beam pattern by using the calibration vector P to obtain a calibrated downlink beam pattern.

S718: The terminal device uses a downlink receive beam with a highest received signal strength in the calibrated downlink beam pattern as an uplink transmit beam of the terminal device.

Case 3: The network device determines first information, where the first information may indicate a beam width of an uplink beam of the terminal device, and the terminal device determines the uplink beam of the terminal device based on the beam width.

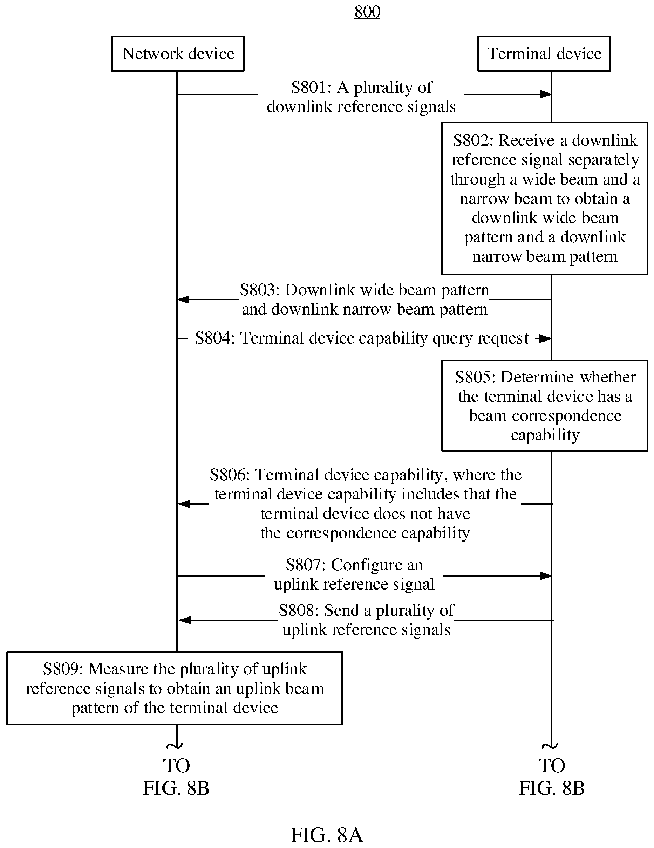

FIG. 8A and FIG. 8B show another beam calibration method 800 according to this application.

S801: A network device sends a plurality of downlink reference signals to a terminal device, and correspondingly, the terminal device receives the plurality of downlink reference signals.

S802: The terminal device receives the plurality of downlink reference signals separately through a wide beam and a narrow beam to obtain a downlink wide beam pattern and a downlink narrow beam pattern.

It should be understood that after receiving the plurality of downlink reference signals separately through the wide beam and the narrow beam, the terminal device separately measures the plurality of downlink reference signals, to obtain a downlink wide beam pattern of the terminal device and a downlink narrow beam pattern of the terminal device.

S803: The terminal device sends the downlink beam pattern to the network device, and correspondingly, the network device receives the downlink beam pattern.

S804: The network device sends a terminal device capability query request, and correspondingly, the terminal device receives the capability query request.

S805: The terminal device determines whether the terminal device has a beam correspondence capability.

S806: The terminal device reports a terminal device capability to the network device, where the terminal device capability includes that the terminal device does not have the correspondence capability.

S807: The network device sends a configuration indication of an uplink reference signal to the terminal device, and correspondingly, the terminal device receives the configuration indication.

S808: The terminal device sends a plurality of uplink reference signals to the network device based on the configuration indication, and correspondingly, the network device receives the plurality of uplink reference signals.

S809: The network device measures the plurality of uplink reference signals to obtain an uplink beam pattern of the terminal device.

S810: The network device compares the downlink wide beam pattern with the uplink beam pattern, and determine whether the wide beam of the terminal device has beam correspondence.

S811: The network device compares the downlink narrow beam pattern with the uplink beam pattern, and determine whether the narrow beam of the terminal device has beam correspondence.

S812: When the wide beam has beam correspondence and the narrow beam has no beam correspondence, separately perform interpolation on the downlink wide beam pattern and the downlink narrow beam pattern, to obtain beam patterns of a plurality of beams with different widths.

It should be understood that widths of the plurality of beams with different widths are between a width of the wide beam and a width of the narrow beam. For example, the width of the wide beam is 10°, the width of the narrow beam is 6°, and widths of the plurality of beams with different widths may be any width between 10° and 6° (for example, 7°, 8°, and 9°).

S813: The network device separately compares downlink beam patterns of the plurality of beams with different widths with the uplink beam pattern, and determines beam width information corresponding to a beam with a smallest width in at least one beam having beam correspondence, to determine whether the network device has a beam correspondence capability.

Optionally, the beam width information includes two possible implementations.

Manner 1: The beam width information may be a specific beam width value. For example, the beam width information is 7°.

Manner 2: The beam width information may be indicated by a relative value, and the relative value may include a preset quantity of parts and a width number.

Optionally, a width between the width of the wide beam and the width of the narrow beam may be divided into the preset quantity of parts, each part of the width has a number, and the width numbers correspond to different relative values.

It should be understood that different relative values indicate different widths of the beams.

For example, the wide beam may be 10°, the narrow beam may be 6°, the preset quantity of parts is 4, and the width numbers may be sequentially 1, 2, 3, and 4, respectively indicating beams with widths of 7°, 8°, 9°, and 10°. The relative value may be 3/4, indicating that the width between the wide beam and the narrow beam is divided into four parts, and the beam width is the third part of the four parts, that is, the beam width is 9°.

S814: The network device sends the beam width information to the terminal device, and correspondingly, the terminal device receives the beam width information.

S815: The terminal device determines an uplink transmit beam of the terminal device based on the beam width information.

Optionally, corresponding to the two manners in S813, the terminal device also determines the uplink transmit beam of the terminal device based on the beam width information in two possible implementations.

Manner 1: The beam width information is a specific beam width value, and the terminal device selects a beam whose width is closest to the width value from the plurality of beams with different widths as the uplink transmit beam.

It should be understood that the terminal device may separately calculate absolute values of differences between widths of the plurality of beams with different widths and the width value, and determine a beam with a smallest absolute value of the differences as the uplink transmit beam of the terminal device.

Manner 2: The beam width information is a relative value, and the terminal device divides the width between the wide beam and the narrow beam into the preset quantity of parts based on the relative value, and numbers widths of the preset quantity of parts. The terminal device determines, based on a width number in the relative value, a width value corresponding to the width number, and selects a beam whose width is closest to the width value in the plurality of beams with different widths as the uplink transmit beam.

It should be understood that sequence numbers of the processes in the method 600, the method 700, and the method 800 do not mean an execution sequence, and the execution sequence of the processes should be determined based on functions and internal logic of the processes. There may be a plurality of possible implementations based on combination manners in different sequences. This is not limited in this application.

Optionally, the method 600, the method 700, and the method 800 are all beam calibration interaction procedures between the terminal device and the network device when the first communication apparatus is the terminal device. Embodiments of this application further include a beam calibration interaction procedure between the terminal device and the network device when the first communication apparatus is the network device. The beam calibration interaction procedure between the terminal device and the network device when the first communication apparatus is the network device is similar to the beam calibration interaction procedure between the terminal device and the network device when the first communication apparatus is the terminal device. Details are not described herein again.

It should be further understood that the foregoing embodiments describe that the first communication apparatus determines the uplink beam of the terminal device based on the downlink beam of the terminal device, and that the first communication apparatus determines the downlink beam of the terminal device based on the uplink beam of the terminal device is similar to that the first communication apparatus determines the uplink beam of the terminal device based on the downlink beam of the terminal device. Details are not described herein again.

The beam calibration process on the terminal device side is described above, and beam management on the terminal device side can be implemented. The following describes a beam calibration process on a network device side. This application further provides another beam calibration method, which is performed by a second communication apparatus. The method includes the following steps.

Step 1: The second communication apparatus obtains a downlink beam pattern of a network device and an uplink beam pattern of the network device, where the uplink beam pattern is obtained by the network device by measuring an uplink reference signal sent by a terminal device, and the downlink beam pattern is obtained by the terminal device by measuring a downlink reference signal sent by the network device.

Step 2: The second communication apparatus determines first information based on the downlink beam pattern and the uplink beam pattern, where the first information is for beam calibration, and the first information includes information indicating whether a beam of the network device has beam correspondence.

The second communication apparatus determines beam calibration information based on the uplink beam pattern and the downlink beam pattern of the network device. In this way, in a scenario in which all beams of the terminal device or the network device have beam correspondence, the terminal device or the network device may determine an uplink beam based on a downlink beam, so that communication between the terminal device and the network device can be established without beam sweeping. In a scenario in which only a part of beams of the terminal device or the network device have beam correspondence, for the beam having beam correspondence, communication between the terminal device and the network device can still be established without beam sweeping; and for a beam having no beam correspondence, communication between the terminal device and the network device can be established by determining, based on beam calibration information, a beam having beam correspondence. In a scenario in which no beam of the terminal device or the network device has beam correspondence, the terminal device or the network device may determine, based on beam calibration information, a beam having beam correspondence, so that the terminal device and the network device can communicate with each other through the beam having a correspondence capability. In this way, the terminal device or the network device may determine a beam based on an actual scenario. The determined beam is more applicable to the current scenario, to help improve beam calibration accuracy.

It should be understood that details of the beam calibration process on the network device side is similar to the beam calibration process on the terminal device side. Details are not described herein again.

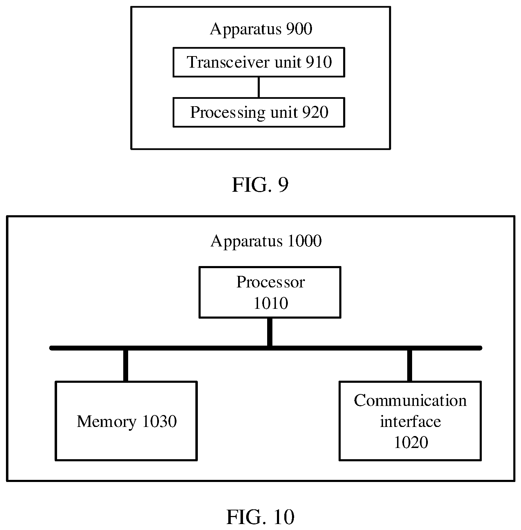

The foregoing describes in detail the beam calibration method according to the embodiments of this application with reference to FIG. 1 to FIG. 8A and FIG. 8B. The following describes in detail a beam calibration apparatus according to embodiments of this application with reference to FIG. 9 to FIG. 10.

FIG. 9 shows a beam calibration apparatus 900 according to an embodiment of this application. The apparatus 900 may be the first communication apparatus. The beam calibration apparatus 900 includes a transceiver unit 910 and a processing unit 920.

The transceiver unit 910 is configured to obtain a downlink beam pattern of a terminal device and an uplink beam pattern of the terminal device, where the downlink beam pattern is obtained by the terminal device by measuring a downlink reference signal sent by a network device, and the uplink beam pattern is obtained by the network device by measuring an uplink reference signal sent by the terminal device.

The processing unit 920 is configured to determine first information based on the downlink beam pattern and the uplink beam pattern, where the first information is for beam calibration, and the first information includes information indicating whether a beam of the terminal device has beam correspondence.

Optionally, the first information is a first correspondence, the first correspondence indicates a correspondence between a first identifier and the information indicating whether the beam of the terminal device has beam correspondence, and the first identifier is an identifier of the beam of the terminal device or an identifier of a reference signal resource of the terminal device.

Optionally, the first information is a bitmap, and the bitmap indicates whether the beam of the terminal device has beam correspondence; and a quantity of bits included in the bitmap is equal to a quantity of beams of the terminal device, or a quantity of bits included in the bitmap is equal to a quantity of reference signal resources of the terminal device.

Optionally, the first information is an array, the array includes at least one element, and the at least one element each indicates a similarity between at least one beam of the terminal device as an uplink beam and the at least one beam as a downlink beam, where the at least one beam of the terminal device has beam correspondence.

Optionally, the first information is a calibration vector, and the calibration vector minimizes a measurement error of the uplink beam pattern and a measurement error of the downlink beam pattern; and a dimension of the calibration vector is equal to a quantity of beams of the terminal device, or a dimension of the calibration vector is equal to a quantity of reference signal resources of the terminal device.

Optionally, the first information includes a beam width indicating an uplink beam of the terminal device; the downlink beam pattern includes a downlink wide beam pattern of the terminal device and a downlink narrow beam pattern of the terminal device. The processing unit 920 is further configured to: determine, based on the downlink wide beam pattern and the uplink beam pattern, whether a wide beam of the terminal device has beam correspondence; determine, based on the downlink narrow beam pattern and the uplink beam pattern, whether a narrow beam of the terminal device has beam correspondence; and when all wide beams of the terminal device have beam correspondence and a beam in a narrow beam of the terminal device has no beam correspondence, obtain the first information based on a width of the wide beam and a width of the narrow beam.

Optionally, the first communication apparatus is the network device, and the processing unit 920 is further configured to send the first information to the terminal device.

Optionally, the first communication apparatus is the terminal device, and the processing unit 920 is further configured to determine the uplink beam of the terminal device based on the first information.

Optionally, the processing unit 920 is further configured to: receive a plurality of downlink reference signals from the network device, and measure the plurality of downlink reference signals to obtain a measurement result, where the measurement result includes information indicating a downlink received signal strength of each beam of the terminal device; and the processing unit 920 is further configured to determine the uplink beam of the terminal device based on the first information and the measurement result.

Optionally, the first information is a first correspondence or a bitmap, the first correspondence indicates a correspondence between a first identifier and the information indicating whether the beam of the terminal device has beam correspondence, the first identifier is an identifier of the beam of the terminal device or an identifier of a reference signal resource of the terminal device, and the bitmap indicates whether the beam of the terminal device has beam correspondence; and the processing unit 920 is further configured to determine a beam with a highest downlink received signal strength in a beam having beam correspondence as the uplink beam of the terminal device.

Optionally, the first information is a calibration vector, and the calibration vector minimizes a measurement error of the uplink beam pattern and a measurement error of the downlink beam pattern; and the processing unit 920 is further configured to: calibrate the beam with the highest downlink received signal strength by using the calibration vector, and determine a calibrated beam as the uplink beam of the terminal device.

Optionally, the first communication apparatus is the terminal device, and the processing unit 920 is further configured to send the first information to the network device.

Optionally, the first communication apparatus is the network device, and the processing unit 920 is further configured to determine the uplink beam of the network device based on the first information.

Optionally, the processing unit 920 is further configured to receive a downlink beam pattern from the terminal device. The processing unit 920 is further configured to determine the uplink beam of the network device based on the first information and the downlink beam pattern of the terminal device.

Optionally, the first information is a first correspondence, a bitmap, or an array; and the processing unit 920 is further configured to determine a beam with a highest downlink received signal strength in a beam having beam correspondence as the uplink beam of the network device.

Optionally, the first information is a calibration vector. The processing unit 920 is further configured to: calibrate the measurement result by using the calibration vector, and determine a calibrated beam with a highest downlink received signal strength as the uplink beam of the terminal device.

It should be understood that, the apparatus 900 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the apparatus 900 may be specifically the terminal in the foregoing embodiments, and the apparatus 900 may be configured to perform the procedures and/or the steps corresponding to the first communication apparatus in the foregoing method embodiments. To avoid repetition, details are not described herein again.

The apparatus 900 has a function for implementing the corresponding steps performed by the terminal in the foregoing method. The function may be implemented by hardware, or may be implemented by hardware executing corresponding software. The hardware or the software includes one or more modules corresponding to the function. For example, the processing module 920 may be configured to implement steps and/or procedures corresponding to the processing module and used to perform a processing action.

In this embodiment of this application, the apparatus 900 in FIG. 9 may alternatively be a chip or a chip system, for example, a system on chip (system on chip, SoC). Correspondingly, the processing module 920 may be a processing circuit of the chip. This is not limited herein.

FIG. 10 shows another beam calibration apparatus 1000 according to an embodiment of this application. The apparatus 1000 includes a processor 1010, a communication interface 1020, and a memory 1030. The processor 1010, the communication interface 1020, and the memory 1030 communicate with each other through an internal connection path. The memory 1030 is configured to store instructions, and the processor 1010 is configured to execute the instructions stored in the memory 1030. The communication interface 1020 may be configured to receive a signal from another module (for example, the memory 1030), and the communication interface 1020 may be alternatively configured to send a signal to another module.

It should be understood that the apparatus 1000 may be specifically the first communication apparatus in the foregoing embodiments, and may be configured to perform steps and/or procedures corresponding to the first communication apparatus in the method embodiments. Optionally, the memory 1030 includes a read-only memory and a random access memory, and provides instructions and data for the processor. A part of the memory may further include a nonvolatile random access memory. For example, the memory may further store information of a device type. The processor 1010 may be configured to execute the instructions stored in the memory. When the processor 1010 executes the instructions stored in the memory, the processor 1010 is configured to perform the steps and/or the procedures in the foregoing method embodiments corresponding to the apparatus. For example, the communication interface 1020 may read the instructions stored in the memory 1030 and send the instructions to the processor 1010. When the instructions are executed by the processor 1010, the apparatus is enabled to perform the steps performed by the first communication apparatus in the foregoing embodiments.

It should be understood that in the embodiments of this application, the processor may be a central processing unit (central processing unit, CPU), or the processor may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

An embodiment of this application further provides a communication system. The communication system may include the foregoing transmitting end and the foregoing receiving end.

According to the method provided in embodiments of this application, this application further provides a computer-readable storage medium. The computer-readable storage medium is configured to store a computer program, and the computer program is used to implement the steps or procedures performed by the transmitting end in the foregoing embodiments.

According to the method provided in embodiments of this application, this application further provides a computer program product. The computer program product includes a computer program (or referred to as code or instructions). When the computer program is run on a computer, the computer may perform the steps or procedures performed by the transmitting end in the foregoing embodiments. A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. A part or all of the modules may be selected according to actual needs to achieve the objectives of the solutions of embodiments.

In addition, functional modules in embodiments of this application may be integrated into one processing module, or each of the modules may exist alone physically, or two or more modules may be integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A beam calibration method, comprising:

   obtaining, by a first communication apparatus, a downlink beam pattern of a terminal device and an uplink beam pattern of the terminal device, wherein the downlink beam pattern is obtained by the terminal device by measuring a downlink reference signal sent by a network device, and the uplink beam pattern is obtained by the network device by measuring an uplink reference signal sent by the terminal device; and
   determining, by the first communication apparatus, first information based on the downlink beam pattern and the uplink beam pattern, wherein the first information is for beam calibration, and the first information comprises information indicating whether a beam of the terminal device has beam correspondence.

2. The method according to claim 1, wherein the first information is a first correspondence, the first correspondence indicates a correspondence between a first identifier and the information indicating whether the beam of the terminal device has beam correspondence, and the first identifier is an identifier of the beam of the terminal device or an identifier of a reference signal resource of the terminal device.

3. The method according to claim 1, wherein the first information is a bitmap, and the bitmap indicates whether the beam of the terminal device has beam correspondence; and
   a quantity of bits comprised in the bitmap is equal to a quantity of beams of the terminal device, or a quantity of bits comprised in the bitmap is equal to a quantity of reference signal resources of the terminal device.

4. The method according to claim 1, wherein the first information is an array, the array comprises at least one element, and the at least one element each indicates a similarity between at least one beam of the terminal device as an uplink beam and the at least one beam as a downlink beam, wherein the at least one beam of the terminal device has beam correspondence.

**5.** The method according to claim 1, wherein the first information is a calibration vector, and the calibration vector minimizes a measurement error of the uplink beam pattern and a measurement error of the downlink beam pattern; and

a dimension of the calibration vector is equal to a quantity of beams of the terminal device, or a dimension of the calibration vector is equal to a quantity of reference signal resources of the terminal device.

**6.** The method according to claim 1, wherein the first information comprises a beam width indicating an uplink beam of the terminal device;

the downlink beam pattern comprises a downlink wide beam pattern of the terminal device and a downlink narrow beam pattern of the terminal device; and

determining, by the first communication apparatus, the first information based on the downlink beam pattern and the uplink beam pattern comprises:

determining, based on the downlink wide beam pattern and the uplink beam pattern, whether a wide beam of the terminal device has beam correspondence;

determining, based on the downlink narrow beam pattern and the uplink beam pattern, whether a narrow beam of the terminal device has beam correspondence; and

when all wide beams of the terminal device have beam correspondence and a beam in a narrow beam of the terminal device has no beam correspondence, obtaining the first information based on a width of the wide beam and a width of the narrow beam.

**7.** The method according to any one of claims 1 to 6, wherein the first communication apparatus is the network device, and the method further comprises:

sending the first information to the terminal device.

**8.** The method according to any one of claims 1 to 6, wherein the first communication apparatus is the terminal device, and the method further comprises:

determining an uplink beam of the terminal device based on the first information.

**9.** The method according to claim 8, wherein the method further comprises:

receiving a plurality of downlink reference signals from the network device, and measuring the plurality of downlink reference signals to obtain a measurement result, wherein the measurement result comprises information indicating a downlink received signal strength of each beam of the terminal device; and

determining the uplink beam of the terminal device based on the first information comprises:

determining the uplink beam of the terminal device based on the first information and the measurement result.

**10.** The method according to claim 9, wherein the first information is a first correspondence or a bitmap, the first correspondence indicates a correspondence between a first identifier and the information indicating whether the beam of the terminal device has beam correspondence, the first identifier is an identifier of the beam of the terminal device or an identifier of a reference signal resource of the terminal device, and the bitmap indicates whether the beam of the terminal device has beam correspondence; and

determining the uplink beam of the terminal device comprises:

determining a beam with a highest downlink received signal strength in a beam having beam correspondence as the uplink beam of the terminal device.

**11.** The method according to claim 9, wherein the first information is a calibration vector, and the calibration vector minimizes a measurement error of the uplink beam pattern and a measurement error of the downlink beam pattern; and

determining the uplink beam of the terminal device comprises:

calibrating the measurement result by using the calibration vector, and determining a calibrated beam with a highest downlink received signal strength as the uplink beam of the terminal device.

**12.** A beam calibration apparatus, comprising a module configured to implement the method according to any one of claims 1 to 11.

**13.** A beam calibration apparatus, comprising a processor, wherein the processor is coupled to a memory, the memory is configured to store a computer program, and when the processor invokes the computer program, the apparatus is enabled to perform the method according to any one of claims 1 to 11.

14. A computer-readable storage medium, configured to store a computer program, wherein the computer program comprises instructions for implementing the method according to any one of claims 1 to 11.

15. A computer program product, wherein the computer program product comprises computer program code, and when the computer program code is run on a computer, the computer is enabled to implement the method according to any one of claims 1 to 11.

FIG. 1

FIG. 2

FIG. 3

400

| |
|---|
| A first communication apparatus obtains a downlink beam pattern of a terminal device and an uplink beam pattern of the terminal device, where the downlink beam pattern is obtained by the terminal device by measuring a downlink reference signal sent by a network device, and the uplink beam pattern is obtained by the network device by measuring an uplink reference signal sent by the terminal device |

S401

| |
|---|
| The first communication apparatus determines first information based on the downlink beam pattern and the uplink beam pattern, where the first information is for beam calibration, and the first information includes information indicating whether a beam of the terminal device has beam correspondence |

S402

FIG. 4

FIG. 5

600

| Network device | | Terminal device |
|---|---|---|

S601: Send a plurality of downlink reference signals →

S602: Measure the plurality of downlink reference signals to obtain a downlink beam pattern of the terminal device

← S603: Downlink beam pattern

S604: Terminal device capability query request →

S605: Determine whether the terminal device has a beam correspondence capability

← S606: Terminal device capability, where the terminal device capability includes that the terminal device does not have the correspondence capability

S607: Configure an uplink reference signal →

← S608: Send a plurality of uplink reference signals

S609: Measure the plurality of uplink reference signals to obtain an uplink beam pattern of the terminal device

S610: Compare the uplink beam pattern with the downlink beam pattern, to obtain a comparison result

S611: Determine first information based on the comparison result

S612: First information →

S613: Measure the plurality of downlink reference signals to obtain a measurement result

S614: Use a downlink receive beam with a highest received signal strength as an uplink transmit beam of the terminal device based on the first information

FIG. 6

700

Network device | Terminal device

S701: Send a plurality of downlink reference signals →

S702: Measure the plurality of downlink reference signals to obtain a downlink beam pattern of the terminal device

← S703: Downlink beam pattern

S704: Terminal device capability query request →

S705: Determine whether the terminal device has a beam correspondence capability

S706: Terminal device capability, where the terminal device capability includes that the terminal device does not have the correspondence capability

S707: Configure an uplink reference signal →

← S708: Send a plurality of uplink reference signals

S709: Measure the plurality of uplink reference signals to obtain an uplink beam pattern of the terminal device

S710: Determine a calibration vector P based on a measurement error of the uplink beam pattern and a measurement error of the downlink beam pattern

S711: Report the calibration vector P →

S712: Query a terminal device capability →

TO
FIG. 7B

TO
FIG. 7B

FIG. 7A

CONT.
FROM
FIG. 7A

CONT.
FROM
FIG. 7A

S713: Determine whether the
terminal device has the beam
correspondence capability

S714: The terminal device has the correspondence
capability

S715: The plurality of downlink reference signals

S716: Measure the plurality of
downlink reference signals to
obtain a downlink beam
pattern of the terminal device

S717: Calibrate the downlink
beam pattern by using the
calibration vector P to obtain a
calibrated downlink beam
pattern

S718: Use a downlink receive
beam with a highest received
signal strength in the calibrated
downlink beam pattern as an
uplink transmit beam of the
terminal device

FIG. 7B

800

```
┌─────────────────┐                              ┌─────────────────┐
│ Network device  │                              │ Terminal device │
└─────────────────┘                              └─────────────────┘
         │         S801: A plurality of                   │
         │────────downlink reference signals─────────────▶│
         │                                   ┌────────────────────────────┐
         │                                   │ S802: Receive a downlink   │
         │                                   │ reference signal separately│
         │                                   │ through a wide beam and a  │
         │                                   │ narrow beam to obtain a    │
         │                                   │ downlink wide beam         │
         │                                   │ pattern and a downlink     │
         │                                   │ narrow beam pattern        │
         │                                   └────────────────────────────┘
         │    S803: Downlink wide beam pattern            │
         │◀───────and downlink narrow beam pattern────────│
         │                                                │
         │─ S804: Terminal device capability query request ─▶│
         │                                   ┌────────────────────────────┐
         │                                   │ S805: Determine whether    │
         │                                   │ the terminal device has a  │
         │                                   │ beam correspondence        │
         │                                   │ capability                 │
         │                                   └────────────────────────────┘
         │   S806: Terminal device capability, where the  │
         │   terminal device capability includes that the │
         │◀──────terminal device does not have────────────│
         │        the correspondence capability           │
         │                                                │
         │          S807: Configure an                    │
         │──────────uplink reference signal──────────────▶│
         │          S808: Send a plurality of             │
         │◀─────────uplink reference signals──────────────│
┌────────────────────────────────────┐                   │
│ S809: Measure the plurality of uplink│                  │
│ reference signals to obtain an uplink beam│              │
│ pattern of the terminal device     │                   │
└────────────────────────────────────┘                   │
         │                                                │
         ∿                                                ∿
        TO                                               TO
     FIG. 8B                                          FIG. 8B
```

FIG. 8A

CONT.
FROM
FIG. 8A

CONT.
FROM
FIG. 8A

S810: Compare the downlink wide beam pattern with the uplink beam pattern, and determine whether the wide beam of the terminal device has beam correspondence

S811: Compare the downlink narrow beam pattern with the uplink beam pattern, and determine whether the narrow beam of the terminal device has beam correspondence

S812: When the wide beam has beam correspondence and the narrow beam has no beam correspondence, separately perform interpolation on the downlink wide beam pattern and the downlink narrow beam pattern, to obtain downlink beam patterns of a plurality of beams with different widths

S813: Separately compare the downlink beam patterns of the plurality of beams with different widths with the uplink beam pattern, and determine beam width information corresponding to a beam with a smallest width in at least one beam having beam correspondence

S814: Beam width information

S815: Determine an uplink transmit beam of the terminal device based on the beam width information

FIG. 8B

Apparatus 900

Transceiver unit 910

Processing unit 920

FIG. 9

Apparatus 1000

Processor
1010

Memory 1030

Communication
interface
1020

FIG. 10

# EP 4 779 892 A1

## INTERNATIONAL SEARCH REPORT

International application No.

**PCT/CN2024/120087**

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

IPC: H04B; H04W

Documentation searched other than minimum documentation to the extent that such documents are included in the fields searched

Electronic data base consulted during the international search (name of data base and, where practicable, search terms used)

CNTXT; CNKI; VEN; ENTXTC; 3GPP: 波束, 对应, 互易, 校准, 有效, 比较, 标识, 索引, 指示, 比特, beam, correspondence, reciprocity, calibration, validity ,compar+, indicat+, index, bitmap

### C. DOCUMENTS CONSIDERED TO BE RELEVANT

| Category* | Citation of document, with indication, where appropriate, of the relevant passages | Relevant to claim No. |
|---|---|---|
| X | CN 110100472 A (NTT DOCOMO, INC.) 06 August 2019 (2019-08-06) description, paragraphs 61-184 | 1-5, 7-15 |
| X | US 2018227898 A1 (SAMSUNG ELECTRONICS CO., LTD.) 09 August 2018 (2018-08-09) description, paragraphs 95-183 | 1-4, 7-15 |
| A | CN 113543322 A (HUAWEI TECHNOLOGIES CO., LTD.) 22 October 2021 (2021-10-22) entire document | 1-15 |
| A | WO 2018085709 A1 (INTEL IP CORP.) 11 May 2018 (2018-05-11) entire document | 1-15 |
| A | WO 2020101757 A1 (HUAWEI TECHNOLOGIES CO., LTD.) 22 May 2020 (2020-05-22) entire document | 1-15 |
| A | CHINA UNICOM. "R1-1708871, Discussion on Beam Correspondence Validity" *3GPP TSG RAN WG1 Meeting #89*, 06 May 2017 (2017-05-06), 3GPP TSG RAN WG1 Meeting #89 | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 November 2024** | **29 November 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/120087**

| Patent document cited in search report | | | Publication date (day/month/year) | Patent family member(s) | | | Publication date (day/month/year) |
|---|---|---|---|---|---|---|---|
| CN | 110100472 | A | 06 August 2019 | CA | 3042370 | A1 | 11 May 2018 |
| | | | | EP | 3537752 | A1 | 11 September 2019 |
| | | | | EP | 3537752 | A4 | 01 July 2020 |
| | | | | WO | 2018084135 | A1 | 11 May 2018 |
| | | | | BR | 112019008712 | A2 | 09 July 2019 |
| | | | | US | 2021167827 | A1 | 03 June 2021 |
| | | | | US | 2020067581 | A1 | 27 February 2020 |
| | | | | JPWO | 2018084135 | A1 | 26 September 2019 |
| | | | | JP | 7013382 | B2 | 31 January 2022 |
| US | 2018227898 | A1 | 09 August 2018 | EP | 3566335 | A1 | 13 November 2019 |
| | | | | EP | 3566335 | A4 | 08 January 2020 |
| | | | | KR | 20180091351 | A | 16 August 2018 |
| | | | | KR | 102543491 | B1 | 14 June 2023 |
| | | | | WO | 2018143646 | A1 | 09 August 2018 |
| CN | 113543322 | A | 22 October 2021 | None | | | |
| WO | 2018085709 | A1 | 11 May 2018 | EP | 3536101 | A1 | 11 September 2019 |
| WO | 2020101757 | A1 | 22 May 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311294486X